# EUROPÄISCHE PATENTSCHRIFT

(11) **EP 3 136 635 B1**
(45) Veröffentlichungstag und Bekanntmachung des Hinweises auf die Patenterteilung: **06.05.2020**
(21) Anmeldenummer: 15182396.0
(22) Anmeldetag: 25.08.2015
(51) Int. Cl.: H04K 3/00, G08G 1/017, G01S 19/21

(54) **VERFAHREN UND SYSTEM ZUM BILDLICHEN ERFASSEN EINES KRAFTFAHRZEUGS**
METHOD AND SYSTEM FOR CAPTURING AN IMAGE OF A MOTOR VEHICLE
PROCEDE ET SYSTEME D'ACQUISITION DE L'IMAGE D'UN VEHICULE AUTOMOBILE

(43) Veröffentlichungstag der Anmeldung: 01.03.2017
(73) Patentinhaber: Toll Collect GmbH, 10785 Berlin (DE)
(72) Erfinder: KÖNIG, Tilmar, 15711 Königs Wusterhausen (DE); BUCHHEIM, Timm, 15366 Neuenhagen (DE)
(74) Vertreter: adares Patent- und Rechtsanwälte Reininger & Partner GmbB

(56) Entgegenhaltungen:
- EP-B1- 1 446 678
- EP-B1- 2 535 737
- DE-A1-102009 013 841
- GB-A- 2 521 246
- US-A- 5 809 161

## Beschreibung

Die Erfindung betrifft ein Verfahren und ein System zum bildlichen Erfassen eines Kraftfahrzeugs, das eine Störquelle mit sich führt, welche geeignet ist, die bestimmungsgemäße Funktion eines Funksignalempfängers, insbesondere einer mit einem GNSS-Empfänger (GNSS steht für Globales Navigationssatelliten-System) ausgerüsteten Positionsbestimmungseinrichtung, zu beeinträchtigen.

Eine auf GNSS basierte Positionsbestimmungseinrichtung ermittelt aus von mehreren Satelliten ausgesendeten GNSS-Signalen ihre Position mittels des GNSS-Empfängers. Wenn der GNSS-Empfänger in ein Kraftfahrzeug eingebaut ist, kann er dazu dienen, Positionsdaten entlang einer von dem Kraftfahrzeug befahrenen Straße zu erhalten. Anhand der Positionsdaten kann beispielsweise die Fahrt auf einer mautpflichtigen Straße erkannt, eine fällige Straßenbenutzungsgebühr errechnet und dem Fahrer oder Halter des Kraftfahrzeugs automatisch in Rechnung gestellt werden. GNSS-Empfänger kommen auch in Navigationssystemen und in Fahrzeugdiebstahl-Verfolgungseinrichtungen zum Einsatz.

Wenn das Kraftfahrzeug eine Störquelle mit sich führt, kann dieser Prozess der Gebührenerhebung negativ beeinflusst werden. Eine Störquelle kann insbesondere ein Störsignal aussenden, mit dem der Empfang von Signalen von Satelliten eines GNSS wie beispielsweise GPS (Globales Positionsbestimmungssystem) gestört werden soll. Ein Störsignal, beispielsweise in Form eines Rauschens oder in Form einzelner oder mehrerer frequenzvariabler oder frequenzinvariabler Träger auf einem oder mehreren Betriebsbändern, z.B. auf dem Betriebsband L1 beim GPS, wird als Jamming-Signal bezeichnet. Ein Störsignal in Form eines Täuschungssignals, das den Signalen mehrerer Satelliten entspricht, jedoch eine falsche Information trägt, die in einem GNSS-Empfänger zur Bestimmung einer anderen Position als der wahren Position führt, wird als Spoofing-Signal bezeichnet.

Wird in einem Fahrzeug eine solche Störquelle eingesetzt, welche die Positionsermittlung des GNSS-Empfängers verfälscht oder gänzlich verhindert, dann kann eine Mautgebühr nicht korrekt errechnet werden. Es ist daher notwendig, ein Fahrzeug, welches eine derartige Störquelle mit sich führt, zu identifizieren. Daraufhin kann der Fahrzeughalter verwarnt oder mit einem Bußgeld belegt werden.

Eine Störquelle, die in einem Frequenzbereich stört, der für die Mobilfunkkommunikation verwendet wird, kann die Übertragung von gebührenrelevanten Daten (beispielsweise von Positionsdaten oder der fahrzeugseitig bestimmten Straßenbenutzungsgebühr selbst) von einer fahrzeugseitigen Einrichtung (on-board unit oder OBU) an die Zentrale unterbinden, wodurch ebenfalls ein Prozess der Mauterhebung gestört werden kann, wenn er Mobilfunkkommunikation umfasst.

EP 2 535 737 B1 beschreibt ein Verfahren, bei dem die Position der Störquelle durch das Passieren des die Störquelle mitführenden Kraftfahrzeugs an einem Verkehrswegepunkt mittels eines Störungsdetektors ermittelt wird. Dabei soll eine Bildaufnahme des die Störquelle mitführenden Kraftfahrzeugs gemacht werden, um das Kraftfahrzeug zu identifizieren.

Fraglich bleibt aber, wie die Störungsdetektion mit dem aufgenommenen Fahrzeug in Verbindung zu bringen ist, insbesondere, wie der Zeitpunkt der Störungsdetektion mit dem Zeitpunkt der Bildaufnahme zu korrelieren ist, damit auch tatsächlich das die Störquelle mitführende Kraftfahrzeug identifiziert wird, und nicht ein unbeteiligtes, also nicht die Störquelle mitführendes Kraftfahrzeug. Im Moment der positionsbestimmenden Störungsdetektion befindet sich das Kraftfahrzeug typischerweise im geringsten Abstand zum straßenseitigen Störungsdetektor. In dieser Position kann von dem Ort des Störungsdetektors aus keine Aufnahme des Kraftfahrzeugkennzeichens erfolgen, weil sich die Fläche des Kraftfahrzeugkennzeichens in diesem Moment parallel zur Sichtlinie des Störungsdetektors befindet. Daher müsste die dem Störungsdetektor zugeordnete Bildaufnahmevorrichtung in Fahrtrichtung vorbestimmt beabstandet sein, wenn sie im Moment der positionsbestimmenden Störungsdetektion das Kraftfahrzeugkennzeichen erfassen soll. Eine solche vorbestimmte Beabstandung ist aber nicht praktikabel.

GB 2521246 A offenbart eine luftgestützte Signalpeilvorrichtung, die ausgebildet ist, die Position eines Störsenders dadurch zu bestimmen, dass sie von verschiedenen Orten das Störsignal erfasst. Dazu wird ein Detektor an einem ersten Ort verwendet, um eine Messung einer oder mehrerer Charakteristiken eines Jamming-Signals durchzuführen. Dann wird der Detektor zu einem zweiten Ort bewegt, um dort eine Messung einer oder mehrerer Charakteristiken eines Jamming-Signals durchzuführen. Dann wird ein dritter Ort ausgewählt, damit der Detektor dort eine Messung einer oder mehrerer Charakteristiken eines Jamming-Signals durchführen kann, wobei der dritte Ort von einer Geraden beabstandet ist, die durch den ersten und zweiten Ort läuft. Der Detektor wird zu dem dritten Ort bewegt, um eine Messung einer oder mehrerer Charakteristiken eines Jamming-Signals durchzuführen. Die vom Detektor durchgeführten Messungen werden verwendet, um die Quelle des Jamming-Signals zu lokalisieren. Zum Bestätigen des lokalisieren Orts der Quelle des Jamming-Signals kann weiterhin ein zweiter Detektor verwendet werden, der Charakteristika der Quelle des Jamming-Signals misst und beispielsweise eine Kamera enthält.

Es ist daher Aufgabe der Erfindung, ein Verfahren und ein System zum bildlichen Erfassen eines Kraftfahrzeugs bereitzustellen, die eine Zuordnung einer Bildaufnahme des Kraftfahrzeugs zu einem Kraftfahrzeug ermöglichen, das eine Störquelle mit sich führt, die geeignet ist, die bestimmungsgemäße Funktion einer mit einem Funksignalempfänger, insbesondere einer mit einem GNSS-Empfänger ausgerüsteten Positionsbestimmungseinrichtung, zu beeinträchtigen.

Diese Aufgabe wird durch ein Verfahren und ein System gemäß den unabhängigen Ansprüchen gelöst. Vorteilhafte Weiterbildungen sind Gegenstand der abhängigen Ansprüche.

Mit dem Verfahren und dem System ist es möglich, eine Störungsdetektion mit der Bildaufnahme des eine Störquelle mitführenden Kraftfahrzeugs in Verbindung zu bringen. Insbesondere ist es möglich, einen Zeitpunkt der Störungsdetektion mit dem Zeitpunkt der Bildaufnahme zu korrelieren, damit auch tatsächlich das die Störquelle mitführende Kraftfahrzeug identifiziert wird und nicht ein keine Störungsquelle mitführendes Kraftfahrzeug. Es wird eine Detektion einer Störquelle und die Bildaufnahme eines die Störquelle mitführenden Kraftfahrzeugs ermöglicht, bei der der Abstand zwischen der Störquellen-Detektionsvorrichtung in Form der Signalpeilvorrichtung und der Bildaufnahmevorrichtung prinzipiell über mehrere Größenordnungen (einige Zentimeter bis einige hundert Meter) frei wählbar ist. Mit dem Verfahren ist daher eine automatisierte und gezielte Ermittlung von Kraftfahrzeugen möglich, die Störungen auf einem GNSS-Band erzeugen. Das Verfahren kann unbeaufsichtigt und insbesondere ohne menschliches Eingreifen durchgeführt werden.

Zusammengefasst sieht die Erfindung vor, einen von einem Kraftfahrzeug mitgeführten Störsender abschnittsweise auf einer Straße von ein- und demselben Ort aus mittels einer Signalpeilvorrichtung, z. B. eines Doppler-Peilers oder eines korrelativen Interferometerpeilers, zu verfolgen, um anhand wenigstens eines gemessenen Peilwinkels mittels der Peilwinkel-Verarbeitungseinrichtung die Ankunft des Kraftfahrzeugs an einer für die Bildaufnahmevorrichtung vorbestimmten Aufnahmeposition zur Bildaufnahme des Kraftfahrzeugs, d.h. den Optimalzeitpunkt oder Optimalzeitbereich, für die Bildaufnahme zu bestimmen und die Bildaufnahmevorrichtung zur Aufnahme eines oder mehrerer Bilder in Abhängigkeit von dem ermittelten Optimalzeitpunkt oder Optimalzeitbereich auszulösen oder aus einer Serie von mehreren Bildaufnahmen ein Bild mit einer Aufnahmezeit auszuwählen, die der Ankunftszeit des Kraftfahrzeugs an der Aufnahmeposition, d.h. dem Optimalzeitpunkt, zumindest näherungsweise entspricht.

Die Ankunftszeit bzw. der Optimalzeitpunkt oder Optimalzeitbereich kann in der Vergangenheit liegen, wenn das Kraftfahrzeug bereits die Bildaufnahmevorrichtung passiert hat. Anders ausgedrückt, liegt in diesem Fall der Optimalzeitpunkt oder Optimalzeitbereich vor dem Zeitpunkt, an dem die Bestimmung des Optimalzeitpunktes oder Optimalzeitbereiches mittels der Peilwinkel-Verarbeitungseinrichtung stattgefunden hat. Alternativ kann der Optimalzeitpunkt oder Optimalzeitbereich in der Zukunft liegen. Dann handelt es sich um eine voraussichtliche Ankunftszeit bzw. einen voraussichtlichen Optimalzeitpunkt oder Optimalzeitbereich.

Dazu überwacht die Signalpeilvorrichtung, die an einer Straße beliebig beispielsweise an einer Brücke oder einem Autobahnkreuz angeordnet ist, eine bestimmte GNSS-Frequenz, insbesondere eine GPS-Frequenz. Wenn ein Störsignal auf diese Frequenz erfasst wird, dessen Leistung über der Satellitenleistung liegt, beispielsweise 3 Dezibel (dB) über der Leistung des Satellitensignals am Empfangsort, wird von der Signalpeilvorrichtung automatisch erkannt, dass eine Störquelle in ihrem Detektionsbereich ist. In der Signalpeilvorrichtung ist hierzu beispielsweise ein Schwellenwert für die Erfassung eines Störsignals hinterlegt.

Beispielsweise liegt die Leistung eines Jamming-Signals üblicherweise um einen Faktor 10 über der Leistung eines Satellitensignals. Die Peilwinkel-Verarbeitungseinrichtung übernimmt die Folge von Winkelwerten aus der Signalpeilvorrichtung und errechnet fortwährend einen Schnittpunkt des die Störquelle mitführenden Kraftfahrzeugs mit dem an dem Stationierungsort der Signalpeilvorrichtung bekannten Verlauf der Straße. Die Peilwinkel-Verarbeitungseinrichtung berechnet weiterhin fortlaufend eine Fortbewegungsgeschwindigkeit dieses Schnittpunkts und den Zeitpunkt, an dem dieser Schnittpunkt an einer bestimmten Position wie beispielsweise der Position, auf die die Bildaufnahmevorrichtung gerichtet ist, eintrifft. Die Bildaufnahmevorrichtung fertigt zum errechneten Ankunftszeitpunkt bzw. Optimalzeitpunkt ein Bild des die Störquelle mitführenden Kraftfahrzeugs samt Kraftfahrzeugkennzeichen und vorzugsweise Fahrer an.

Die Anfertigung von Bildaufnahmen von Kraftfahrzeugen auf Straßen ist beispielsweise in der US 5,757,286 A oder EP 1 446 678 B1 beschrieben. Die Erfassung von Störsignalen wie eines Jamming-Signals oder eines Spoofing-Signals ist beispielsweise in der EP 2 535 737 B1 beschrieben.

Das erfindungsgemäße Verfahren sieht vor, eine Position des Kraftfahrzeugs auf indirekte d.h. vom GNSS-Empfänger unabhängige Weise zu ermitteln, wenn eine Störquelle in einem Kraftfahrzeug detektiert wird. Es wird ein Peilwinkel der Störquelle mittels der Signalpeilvorrichtung ermittelt und anhand des Peilwinkels mittels der Peilwinkel-Verarbeitungseinrichtung der Optimalzeitpunkt oder Optimalzeitbereich zur bildlichen Aufnahme bestimmt und eine bildliche Aufnahme vor oder nach der Bestimmung des Optimalzeitpunktes oder Optimalzeitbereiches erzeugt. Die Peilwinkel-Verarbeitungseinrichtung oder eine weitere Verarbeitungseinrichtung, Verarbeitungsvorrichtung oder Verarbeitungseinheit kann weiterhin weitere Funktionen durchführen, beispielsweise Störquellen mitführende Kraftfahrzeuge zählen oder sie einer Kategorie wie beispielsweise einer Fahrzeugkategorie wie Lastkraftwagen, Personenkraftfahrzeug, Motorrad usw. zuordnen.

Die Erfindung betrifft ein Verfahren zum bildlichen Erfassen eines Kraftfahrzeugs, das eine Störquelle mit sich führt, die geeignet ist, die bestimmungsgemäße Funktion eines Funksignalempfängers zu beeinträchtigen, mittels einer Signalpeilvorrichtung und einer Bildaufnahmevorrichtung, umfassend die folgenden Schritte: Erfassen eines Störsignals der Störquelle und Ermitteln mindestens eines Peilwinkels der Störquelle mittels der Signalpeilvorrichtung; Bestimmen, anhand des ermittelten Peilwinkels, eines Optimalzeitpunktes oder eines Optimalzeitbereiches, an dem das Kraftfahrzeug in Relation zu der Bildaufnahmevorrichtung eine Position einnimmt, welche das Identifizieren des Kraftfahrzeugs anhand einer am Optimalzeitpunkt oder innerhalb des Optimalzeitbereiches erzeugten Bildaufnahme ermöglicht, mittels einer Peilwinkel-Verarbeitungseinrichtung; Erzeugen einer Bildaufnahme von dem Kraftfahrzeug oder von einem Kraftfahrzeugbereich des Kraftfahrzeugs zu dem Optimalzeitpunkt oder innerhalb des Optimalzeitbereiches mittels der Bildaufnahmevorrichtung.

Die Störquelle sendet ein Störsignal in Form eines Jamming- oder Spoofing-Signals aus, das den Empfang von GNSS-Signalen von einem Satelliten unterbindet oder ein GNSS-Signal vortäuscht. In dem Verfahren erfolgt die Positionsbestimmung des Kraftfahrzeugs über das Störsignal, das die Störquelle aussendet. Die Signalpeilvorrichtung stellt vorzugsweise ein Doppler-Peiler dar. Dabei wird vorzugsweise eine Mehrzahl oder Vielzahl von längs eines Kreises angeordneter Peilantennen verwendet. Die Antennen-Ebene, zu denen alle Peilantennen senkrecht angeordnet sind, kann beispielsweise parallel oder senkrecht zur Straßenoberfläche ausgerichtet sein, auf der das die Störquelle mitführende Kraftfahrzeug entlang fährt. Wenn ein Störsignal erfasst wird, werden die Peilantennen einzeln und nacheinander zur Störquelle durchgeschaltet und abgetastet. Die erhaltenen Peilsignale werden ausgewertet. Der Peilwinkel kann aus der Phasenmodulation oder Frequenzmodulation der Peilspannung gewonnen werden, die durch die Abtastung der Peilantennen entsteht.

Wenn die Signalpeilvorrichtung ein Interferometer ist, kann der Peilwinkel als Ergebnis einer Funktion der Phasenbeziehung von Peilantennen untereinander ermittelt werden.

Es sind auch Signalpeilvorrichtungen bekannt, bei denen der Peilwinkel aus der Amplitudenmodulation der Peilspannung gewonnen wird, die durch eine Peilantenne mit rotierender Doppelkreis-Richtcharakteristik und einer zusätzlichen Rundstrahlantenne entsteht, indem die Ausgangsspannungen der beiden Antennen gleichphasig oder gegenphasig zusammengesetzt werden.

In einer bevorzugten Ausführungsform des Verfahrens weist die Signalpeilvorrichtung einen Doppler-Peiler, einen Watson-Watt-Peiler und/oder einen korrelativen Interferometerpeiler auf. Die Peilwinkel dieser Signalpeilvorrichtungen können beispielsweise wie vorstehend beschrieben bestimmt werden.

Je mehr Peilwinkel zeitlich versetzt ermittelt werden, desto genauer kann der Optimalzeitpunkt bei einem bekannten Straßenverlauf ermittelt werden. Die Ermittlung von einem bis sieben Peilwinkeln ist zur Bestimmung des Optimalzeitpunktes oder Optimalzeitbereiches ausreichend.

Unter dem Optimalzeitpunkt oder Optimalzeitbereich ist die zu bestimmende bzw. die bestimmte Ankunftszeit des Kraftfahrzeugs an einer für die Bildaufnahmevorrichtung vorbestimmten Bildaufnahmeposition zu verstehen. Daher stellt der Optimalzeitpunkt oder Optimalzeitbereich einen Zeitpunkt oder Zeitbereich dar, an dem das Kraftfahrzeug in Relation zu der Bildaufnahmevorrichtung eine Position einnimmt, welche das Identifizieren des Kraftfahrzeugs anhand einer am Optimalzeitpunkt oder innerhalb des Optimalzeitbereiches erzeugten Bildaufnahme ermöglicht. Anhand des ermittelten Peilwinkels kann die Position des die Störquelle mitführenden Kraftfahrzeugs relativ zu der Signalpeilvorrichtung ermittelt werden. Aus einer angenommenen, weil beispielsweise vorgeschriebenen, Richtgeschwindigkeit für Kraftfahrzeuge oder einer anhand mehrerer ermittelter Peilwinkel bestimmten Fortbewegungsgeschwindigkeit des Kraftfahrzeugs kann der Optimalzeitpunkt oder Optimalzeitbereich bei bekanntem Verlauf der Straße, auf dem sich das die Störquelle mitführende Kraftfahrzeug bewegt, leicht bestimmt werden. Durch eine zeitlich versetzte Ermittlung von Peilwinkeln kann der Optimalzeitpunkt oder Optimalzeitbereich nach einer ersten Bestimmung nachjustiert bzw. korrigiert werden, d.h. an das tatsächliche Fahrverhalten des die Störquelle mitführenden Kraftfahrzeugs angepasst werden.

Bei der Peilwinkel-Verarbeitungseinrichtung kann es sich um eine in die Signalpeilvorrichtung integrierte Datenverarbeitungseinrichtung, beispielsweise einen Prozessor der Signalpeilvorrichtung, handeln. Alternativ kann die Peilwinkel-Verarbeitungseinrichtung von der Signalpeilvorrichtung getrennt angeordnet sein und beispielsweise Teil eines Servers sein, an den die Signalpeilvorrichtung den/die ermittelten Peilwinkel sendet. Die Peilwinkel-Verarbeitungseinrichtung weist vorzugsweise einen Mikroprozessor und einen Speicher auf.

Die Schritte Bestimmen, anhand des ermittelten Peilwinkels, des Optimalzeitpunktes oder des Optimalzeitbereiches, an dem das Kraftfahrzeug in Relation zu der Bildaufnahmevorrichtung eine Position einnimmt, welche das Identifizieren des Kraftfahrzeugs anhand einer am Optimalzeitpunkt oder innerhalb des Optimalzeitbereiches erzeugten Bildaufnahme ermöglicht, mittels einer Peilwinkel-Verarbeitungseinrichtung und Erzeugen der Bildaufnahme von dem Kraftfahrzeug oder von einem Kraftfahrzeugbereich des Kraftfahrzeugs zu dem Optimalzeitpunkt oder innerhalb des Optimalzeitbereiches mittels der Bildaufnahmevorrichtung können in einer beliebigen Reihenfolge durchgeführt werden. D.h., in einer ersten Verfahrensvariante werden zuerst der Schritt des Bestimmens des Optimalzeitpunktes oder des Optimalzeitbereiches und dann der Schritt des Erzeugens der Bildaufnahme durchgeführt. In einer zweiten Verfahrensvariante kann alternativ zuerst der Schritt des Erzeugens der Bildaufnahme und dann der Schritt des Bestimmens des Optimalzeitpunktes oder des Optimalzeitbereiches durchgeführt werden.

In der ersten Verfahrensvariante wird zuerst anhand wenigstens eines gemessenen Peilwinkels die Ankunft des Kraftfahrzeugs an einer für die Bildaufnahmevorrichtung vorbestimmten Aufnahmeposition zur Bildaufnahme des Kraftfahrzeugs bestimmt und dann die Bildaufnahmevorrichtung zur Aufnahme eines oder mehrerer Bilder in Abhängigkeit von der ermittelten Ankunft bzw. des Optimalzeitpunktes ausgelöst, d.h. bei der voraussichtlichen Ankunftszeit. In der zweiten Verfahrensvariante wird mindestens eine Bildaufnahme von dem Kraftfahrzeug oder von einem Kraftfahrzeugbereich des Kraftfahrzeugs zu dem Optimalzeitpunkt oder innerhalb des Optimalzeitbereiches erzeugt und dann anhand des ermittelten Peilwinkels aus einer Serie von mehreren Bildaufnahmen ein Bild mit einer Aufnahmezeit ausgewählt, die einer Ankunftszeit des Kraftfahrzeugs an der Aufnahmeposition zumindest näherungsweise entspricht. Bei der Bildaufnahme kann es sich um ein einzelnes Foto, um eine Reihe von Fotos oder um ein Video, d.h. eine Bildsequenz, handeln. Beispielsweise handelt es sich bei der Bildaufnahme um ein Foto, wenn die Erzeugung der Bildaufnahme nach der Ermittlung des Optimalzeitpunktes erfolgt. D.h. wenn ein Optimalzeitpunkt ermittelt wird und anschließend die Bildaufnahme erzeugt wird, ist die Bildaufnahme beispielsweise ein Foto. Die Aufnahme einer Reihe von Fotos oder insbesondere eines Video ist vorteilhaft, wenn die Erzeugung der Bildaufnahme vor der Bestimmung des Optimalzeitpunktes oder Optimalzeitbereiches durchgeführt wird.

Im Allgemeinen sind Kraftfahrzeuge anhand wenigstens eines Kraftfahrzeugkennzeichens identifizierbar, welches auf wenigstens ein am Kraftfahrzeug frontseitig und/ oder rückseitig befestigtes Kraftfahrzeugkennzeichenschild typischerweise aufgedruckt und/ oder aufgeprägt ist. Das Kraftfahrzeugkennzeichen umfasst maschinenlesbare Zeichen, die von einer Bildverarbeitungseinrichtung anhand einer Zeichenerkennungsverfahrens aus den Daten des Bildes, welches von der Bildaufnahmevorrichtung von dem Kraftfahrzeugkennzeichenschild erzeugt wurde, bestimmt werden können. Zur Vereinfachung wird das Kraftfahrzeugkennzeichenschild auch als Kraftfahrzeugkennzeichen bezeichnet.

Der Schritt Erzeugen einer Bildaufnahme von dem Kraftfahrzeug oder von einem Kraftfahrzeugbereich des Kraftfahrzeugs umfasst insbesondere eine frontseitige oder rückseitige Bildaufnahme des Kraftfahrzeugs oder eines Kraftfahrzeugbereichs. Im Falle einer frontseitigen Bildaufnahme des Kraftfahrzeugs oder Kraftfahrzeugbereichs wird die Bildaufnahme bevorzugt derart erzeugt, dass das Kraftfahrzeugkennzeichen und bevorzugter auch der Fahrer des Kraftfahrzeugs auf der Bildaufnahme erkennbar aufgenommen sind. Im Falle einer rückseitigen Bildaufnahme des Kraftfahrzeugs oder Kraftfahrzeugbereichs wird die Bildaufnahme vorzugsweise derart erzeugt, dass das Kraftfahrzeugkennzeichen auf der Bildaufnahme erkennbar aufgenommen ist.

Vorzugsweise wird zu dem Optimalzeitpunkt oder während des Optimalzeitbereiches ein Bildauslösesignal an die Bildaufnahmevorrichtung übertragen, und wird das Erzeugen der Bildaufnahme von dem Kraftfahrzeug oder von dem Kraftfahrzeugbereich des Kraftfahrzeugs zu dem Optimalzeitpunkt oder innerhalb des Optimalzeitbereiches in Folge des Empfangs des Bildauslösesignals in der Bildaufnahmevorrichtung ausgelöst. Das Bildauslösesignal wird vorzugsweise von der Signalpeilvorrichtung und/oder der in sie integrierten Verarbeitungseinheit übertragen, die den Optimalzeitpunkt oder Optimalzeitbereich ermittelt. Wenn die Signalpeilvorrichtung von der Bildaufnahmevorrichtung beabstandet angeordnet ist, weist sie beispielsweise eine Peilerfunkvorrichtung auf und weist die Bildaufnahmevorrichtung eine Bildaufnahmefunkvorrichtung bzw. Kamerafunkvorrichtung auf, die das Bildauslösesignal als Funksignal von der Peilerfunkvorrichtung empfangen kann. In dieser Verfahrensausgestaltung wird zuerst der Optimalzeitpunkt oder Optimalzeitbereich bestimmt und dann die Bildaufnahme des Kraftfahrzeugs oder des Kraftfahrzeugbereichs erzeugt.

Alternativ bevorzugt wird der Optimalzeitpunkt oder der Optimalzeitbereich an die Bildaufnahmevorrichtung mitgeteilt, wobei die Bildaufnahmevorrichtung infolge dessen die Bildaufnahme von dem Kraftfahrzeug oder von dem Kraftfahrzeugbereich des Kraftfahrzeugs zu dem Optimalzeitpunkt oder innerhalb des Optimalzeitbereiches erzeugt. In dieser Verfahrensausgestaltung wird zuerst der Optimalzeitpunkt oder Optimalzeitbereich bestimmt und dann die Bildaufnahme des Kraftfahrzeugs oder des Kraftfahrzeugbereichs erzeugt. Dabei wird der Optimalzeitpunkt oder der Optimalzeitbereich an die Bildaufnahmevorrichtung beispielsweise von der Signalpeilvorrichtung und/oder der Peilwinkel-Verarbeitungseinrichtung mitgeteilt, und die Bildaufnahmevorrichtung erzeugt infolge dessen die Bildaufnahme von dem Kraftfahrzeug oder von dem Kraftfahrzeugbereich zu dem Optimalzeitpunkt oder innerhalb des Optimalzeitbereiches. Die Mitteilung des Optimalzeitpunktes oder Optimalzeitbereiches kann zeitlich vor dem Erzeugen der Bildaufnahme erfolgen, d.h. die Mitteilung muss nicht sofort eine Bildaufnahme auslösen. Vielmehr kann der Bildaufnahmevorrichtung der Optimalzeitpunkt oder Optimalzeitbereich mitgeteilt werden, und zeitlich versetzt kann die Bildaufnahmevorrichtung ein Auslösesignal zur Erzeugung der Bildaufnahme selbst generieren, um zum Optimalzeitpunkt oder innerhalb des Optimalzeitbereiches die Bildaufnahme zu erzeugen.

Die Übertragung des Bildauslösesignals oder des Optimalzeitpunktes für die Bildaufnahme im Funkwege zwischen der Peilerfunkvorrichtung der Signalpeilvorrichtung und der Bildaufnahmefunkvorrichtung der Bildaufnahmevorrichtung kann unidirektional (beispielsweise im Rundfunk-(Broadcast-) oder Unicast-Modus) erfolgen, wobei die Peilerfunkvorrichtung nur einen Sender aufweist und die Bildaufnahmefunkvorrichtung nur einen Empfänger aufweist, oder bidirektional sein, wobei sowohl die Peilerfunkvorrichtung als auch die Bildaufnahmefunkvorrichtung jeweils einen Sendeempfänger aufweisen, beispielsweise um sich gegenseitig vor der besagten Übertragung zu authentifizieren.

Die Kamerafunkvorrichtung kann auch von einer Kontrolleinrichtung umfasst sein, die mit der Bildaufnahmevorrichtung gekoppelt ist und steuert, wann die die Bildaufnahmevorrichtung Bildaufnahmen erzeugen soll.

Weiterhin kann alternativ bevorzugt sein, dass mittels der Bildaufnahmevorrichtung eine Reihe von mehreren Bildaufnahmen erzeugt wird, und die Peilwinkel-Verarbeitungseinrichtung oder eine weitere Verarbeitungseinrichtung wie eine Daten- und/oder Bildverarbeitungseinrichtung aus der Reihe von mehreren Bildaufnahmen wenigstens eine Bildaufnahme auswählt, die zu dem Optimalzeitpunkt oder innerhalb des Optimalzeitbereiches erzeugt wurde. Bei der Bildverarbeitungseinrichtung kann es sich um die vorstehende Peilwinkel-Verarbeitungseinrichtung handeln. Alternativ ist die Bildverarbeitungseinrichtung von der vorstehend genannten Peilwinkel-Verarbeitungseinrichtung verschieden, dann ist die Bildverarbeitungseinrichtung vorzugsweise mit der Signalpeilvorrichtung und der Bildaufnahmevorrichtung gekoppelt. Die Bildaufnahmevorrichtung kann unabhängig von der Signalpeilvorrichtung und Peilwinkel-Verarbeitungseinrichtung eine Bildaufnahme vorzugsweise in Form einer Videoaufnahme erzeugen, während die Signalpeilvorrichtung ausschließlich mit der Peilwinkel-Verarbeitungseinrichtung kommuniziert, die neben der Bestimmung des Optimalzeitpunktes oder Optimalzeitbereiches eine bereits erzeugte Bildaufnahme auswählt und bis zu einem Abrufen der Bildaufnahme bzw. Auslesen eines Speichers der Datenverarbeitungseinrichtung speichert und/oder an einen Zentralrechner sendet.

Gemäß einer bevorzugten Ausführungsform wird anhand des ermittelten Peilwinkels mittels der Peilwinkel-Verarbeitungseinrichtung ein Optimalzeitbereich bestimmt und die Bildaufnahmevorrichtung in Abhängigkeit von dem Optimalzeitbereich ausgelöst, während des Optimalzeitbereiches die Reihe mehrerer Bildaufnahmen zu erzeugen. Beispielsweise wird anhand des ermitteln Peilwinkels mittels der Peilwinkel-Verarbeitungseinrichtung ein Bildreihenaufnahme-Startzeitpunkt des Optimalzeitbereiches bestimmt, welcher, beispielsweise von der Signalpeilvorrichtung, an die Bildaufnahmevorrichtung übermittelt wird. Die Bildaufnahmevorrichtung wird dann in Abhängigkeit von dem Bildreihenaufnahme-Startzeitpunkt ausgelöst, während des Optimalzeitbereiches die Reihe mehrerer Bildaufnahmen in einer vorgegebenen Anzahl in einem vorbestimmten Zeitabstand oder für eine vorgegebene Dauer oder bis zu einem Bildreihenaufnahme-Endzeitpunkt zu erzeugen. Der anhand des Peilwinkels bestimmte Bildreihenaufnahme-Startzeitpunkt dient in diesem Fall als untere Schranke des Optimalzeitbereiches. Insbesondere nimmt die Bildaufnahmevorrichtung zumindest solange keine Bildaufnahmen außerhalb des bestimmten Optimalzeitbereiches auf, solange sie zeitlich nicht in einen weiteren Optimalzeitbereich gelangt.

Sofern die Dauer des Optimalzeitbereiches, beispielsweise durch eine vorgegebene Anzahl von in einem vorbestimmten Zeitabstand zu erzeugenden Bildaufnahmen, vorgegeben ist, dient der von der Peilwinkel-Verarbeitungseinrichtung bestimmte Bildreihenaufnahmen-Startzeitpunkt auch zur Bestimmung des Optimalzeitbereiches und damit auch eines Bildreihenaufnahme-Endzeitpunktes, der die obere Schranke des Optimalzeitbereiches bildet. Insoweit Bildreihenaufnahme-Startzeitpunkt und Bildreihenaufnahme-Endzeitpunkt voneinander abhängig durch verschiedene Peilwinkel-Verarbeitungseinrichtungen bestimmt werden - beispielsweise der Bildreihenaufnahme-Startzeitpunkt von einer Peilwinkel-Verarbeitungseinrichtung der Signalpeilvorrichtung und der Bildreihenaufnahme-Endzeitpunkt von einer Peilwinkel-Verarbeitungseinrichtung der Bildaufnahmevorrichtungbilden diese Peilwinkel-Verarbeitungseinrichtungen, die gegebenenfalls zumindest zeitweise durch eine Funkverbindung miteinander kommunikativ gekoppelt sind, gemeinsam die Peilwinkel-Verarbeitungseinrichtung.

Es ist möglich, dass von dem Optimalzeitbereich die Dauer vorbestimmt ist, wodurch der Bildreihenaufnahme-Startzeitpunkt und der Bildreihenaufnahme-Endzeitpunkt stets in demselben zeitlichen Abstand voneinander stehen. Bevorzugt sind jedoch der Bildreihenaufnahme-Startzeitpunkt und der Bildreihenaufnahme-Endzeitpunkt von der gemessenen oder angenommenen Geschwindigkeit des den Störsender mit sich führenden Fahrzeugs abhängig, wobei der Bildaufnahme-Startzeitpunkt umso später liegt und die Dauer des Optimalzeitbereiches umso größer ist, je langsamer die gemessene oder angenommene Geschwindigkeit des Fahrzeugs ist.

Vorzugsweise wird die Auswahl der Bildaufnahme zu dem Optimalzeitpunkt oder Optimalzeitbereich durch die Verwendung eines Elektromagnetischen-Strahlungs-Leistungs-Sensors (EM-Strahlungs-Leistungs-Sensor) unterstützt.

Um innerhalb des Optimalzeitbereiches einen Optimalzeitpunkt oder einen eingeschränkten Optimalzeitbereich zu bestimmen, sind vorzugsweise folgende zusätzlichen Verfahrensschritte vorgesehen: Erfassen eines Störsignals der Störquelle und Aufnehmen wenigstens eines Zeitverlaufs einer Empfangssignalstärke des Störsignals mittels einer Signalerfassungsvorrichtung; und Bestimmen eines Optimalzeitpunktes oder eines eingeschränkten Optimalzeitbereiches anhand des aufgenommenen Zeitverlaufs der Empfangssignalstärke, mittels der Peilwinkel-Verarbeitungseinrichtung. Um aus einer Reihe von mehreren Bildaufnahmen, die innerhalb des mittels der Peilwinkel-Verarbeitungseinrichtung bestimmten Optimalzeitbereiches aufgenommen wurden, mittels einer Bildverarbeitungseinrichtung diejenige Bildaufnahme auszuwählen, die zu einem Optimalzeitpunkt innerhalb des Optimalzeitbereiches erzeugt wurde, oder diejenigen Bildaufnahmen auszuwählen, die innerhalb des eingeschränkten Optimalzeitbereiches erzeugt wurden, kann anschließend zusätzlich ein Verfahrensschritt vorgesehen werden, in dem mittels der Bildverarbeitungseinrichtung in Abhängigkeit von dem bestimmten Optimalzeitpunkt eine Auswahl wenigstens einer Bildaufnahme der Reihe von mehreren Bildaufnahmen, die während des Optimalzeitbereiches erzeugt wurden, durchgeführt wird. Die Signalerfassungsvorrichtung weist hier vorzugsweise einen EM-Strahlungs-Leistungs-Sensor auf.

Eine solche Signalerfassungsvorrichtung und das Verfahren zum Bestimmen des Optimalzeitpunktes oder des Optimalzeitbereiches mithilfe einer solchen Vorrichtung wird in der am gleichen Anmeldetag wie die vorliegende Anmeldung vom selben Anmelder eingereichte Patentanmeldung mit internem Aktenzeichen TCL-102-EP offenbart, deren gesamte Offenbarung hiermit zur Bezugnahme übernommen wird.

Bevorzugterweise ist die Signalerfassungsvorrichtung Teil der Signalpeilvorrichtung oder ist die Signalpeilvorrichtung Teil der Signalerfassungsvorrichtung. Wenn beispielsweise die Signalpeilvorrichtung eine oder mehrere Antennen umfasst, kann eine der Antennen dazu verwendet werden, das Störsignal zu erfassen und den Zeitverlauf der Empfangssignalstärke des Störsignals aufzunehmen.

Die ausgewählte Bildaufnahme wird vorzugsweise zur Identifizierung des Kraftfahrzeugs einer optischen Zeichenerkennung (OZE bzw. OCR, optical character recognition) einer Bildverarbeitungseinrichtung unterworfen. Das Kennzeichen des die Störquelle mitführenden Kraftfahrzeugs wird mittels der Bildverarbeitungseinrichtung ausgelesen und kann identifiziert werden. Das identifizierte Kennzeichen kann von der Peilwinkel-Verarbeitungseinrichtung an einen Server übersendet werden, damit der Halter des Kraftfahrzeugs ermittelt wird.

Der Peilwinkel wird vorzugsweise als ein Winkel ermittelt, welcher von einer die Signalpeilvorrichtung und das Kraftfahrzeug verbindenden Geraden und einer ausgehend von der Signalpeilvorrichtung die Straße senkrecht kreuzenden Geraden aufgespannt wird. Vor dem Passieren der Signalpeilvorrichtung, ermitteln diese für die Kraftfahrzeugposition einen positiven Winkelwert, nach dem Passieren einen negativen Winkelwert. Dies gilt insbesondere dann, wenn die Signalpeilvorrichtung mit einer Peilungsebene parallel zur Straßenebene angeordnet ist. Ist die Signalpeilvorrichtung mit einer Peilungsebene senkrecht zur Straßenebene angeordnet, dann wird der Peilwinkel vorzugsweise als ein Winkel ermittelt, welcher von einer die Signalpeilvorrichtung und das Kraftfahrzeug verbindenden Geraden und einer ausgehend von der Signalpeilvorrichtung senkrecht nach unten verlaufenden Geraden, d. h. einem die Signalpeilvorrichtung kreuzenden Normalvektor der Straßenebene, aufgespannt wird.

In einer bevorzugten Ausführungsform wird der Optimalzeitpunkt oder der Optimalzeitbereich mittels der Datenverarbeitungseinrichtung als der Zeitpunkt oder Zeitbereich bestimmt, an dem oder während dessen der Peilwinkel einen vorbestimmten Schwellwinkel unterschreitet oder überschreitet oder innerhalb eines vorbestimmten Winkelbereichs liegt. Diese Ausführungsform ist besonders vorteilhaft, wenn die Signalpeilvorrichtung und die Bildaufnahmevorrichtung miteinander gekoppelt sind, d.h. insbesondere wenn sie zusammen an einem Stativ oder einer Brücke befestigt sind. Wenn der Optimalzeitpunkt oder Optimalzeitbereich bestimmt ist, wird vorzugsweise zu dem Optimalzeitpunkt oder während des Optimalzeitbereiches das Bildauslösesignal an die Bildaufnahmevorrichtung übertragen, sodass die Bildaufnahme von dem Kraftfahrzeug oder von dem Kraftfahrzeugbereich des Kraftfahrzeugs erzeugt wird.

Der vorbestimmte Schwellwinkel liegt vorzugsweise im Bereich von 30° bis 80° oder von 50° bis 75°. Der vorbestimmte Winkelbereich liegt vorzugsweise im Bereich von 30° bis 80°. Wenn der vorbestimmte Schwellwinkel unterschritten wird, kann von der Peilwinkel-Verarbeitungseinrichtung eine Distanz des die Störquelle mitführenden Kraftfahrzeugs zu der Bildaufnahmevorrichtung ermittelt werden, weil die Distanz des Straßenpunktes, auf dem sich das Kraftfahrzeug relativ zur Bildaufnahmevorrichtung befindet, daraus bekannt ist. Beispielsweise ist es auch möglich, dass bei Detektion der Unterschreitung des vorbestimmten Schwellwinkels die Bildaufnahmevorrichtung ein Signal zum Auslösen der Bildaufnahme in Form eines Fotos erhält. Das gleiche gilt sinngemäß für den vorbestimmten Winkelbereich, wobei hier vorzugsweise eine Reihe von Bildern oder eine Videosequenz von der Bildaufnahmevorrichtung erzeugt wird.

Alternativ bevorzugt werden zwei oder mehr Peilwinkel an unterschiedlichen Zeitpunkten ermittelt, wobei der Optimalzeitpunkt oder der Optimalzeitbereich mittels einer Extrapolation oder Interpolation aus den ermittelten Peilwinkeln bestimmt wird. Hierbei ist weiterhin bevorzugt, dass ein Straßenverlauf einer Straße, auf dem sich das Kraftfahrzeug bewegt, in die Extrapolation oder die Interpolation einbezogen wird. Bei der Ermittlung von zwei oder mehr Peilwinkeln an unterschiedlichen Zeitpunkten kann die Fahrgeschwindigkeit des Kraftfahrzeugs zur Ermittlung des Optimalzeitpunktes oder Optimalzeitbereiches miteinbezogen werden. Da anhand der Peilwinkel die Position des Kraftfahrzeugs zu den Peilwinkel-Mess-Zeitpunkten bestimmt werden kann, kann daraus die Fahrzeuggeschwindigkeit ermittelt und zur Bestimmung des Optimalzeitpunktes oder Optimalzeitbereiches verwendet werden. Wenn weiterhin der Straßenverlauf einbezogen wird, lässt sich die Position des Kraftfahrzeugs, an der eine Bildaufnahme optimal durchführbar ist, noch genauer ermitteln.

In einer bevorzugten Ausführungsform wird ein weiterer Peilwinkel derselben Störquelle durch eine weitere Signalpeilvorrichtung ermittelt, wobei aus mehreren Bildaufnahmevorrichtungen einer Kontrolleinrichtung die Bildaufnahmevorrichtung zum Erzeugen der Bildaufnahme oder zum Bereitstellen einer erzeugten Bildaufnahme durch die Kontrolleinrichtung ausgewählt wird. Diese Verfahrensausgestaltung eignet sich vorzugsweise für eine Straße mit mehreren Richtungs-Fahrstreifen und/ oder einem Standstreifen. Hier muss nicht nur die Position des Kraftfahrzeugs mit der Störquelle zu einem Optimalzeitpunkt oder Optimalzeitbereich bestimmt werden sondern auch der Fahrstreifen, auf dem sich das Kraftfahrzeug zu dem Optimalzeitpunkt oder im Optimalzeitbereich befindet. Der weitere Peilwinkel derselben Störquelle kann durch die weitere Signalpeilvorrichtung im Wesentlichen zeitgleich oder zeitversetzt ermittelt werden. Die von der Kontrolleinrichtung ausgewählte Bildaufnahmevorrichtung kann zum Erzeugen der Bildaufnahme ausgelegt sein, wenn die Bildaufnahme nach dem Bestimmen des Optimalzeitpunktes oder Optimalzeitbereiches erfolgt, oder zum Bereitstellen einer bereits erzeugten Bildaufnahme ausgelegt sein, wenn die Bildaufnahme vor dem Bestimmen des Optimalzeitpunktes oder Optimalzeitbereiches erfolgt ist, und von der Kontrolleinrichtung entsprechend gesteuert werden.

Das Verwenden der Signalpeilvorrichtung und der weiteren Signalpeilvorrichtung ermöglicht anhand der zwei ermittelten Peilwinkel einen Schnittpunkt zu bilden, der die Kraftfahrzeugposition auf einem der Fahrstreifen an dem Peilwinkel-Mess-Zeitpunkt darstellt, wenn die Peilwinkel der Signalpeilvorrichtung und der weiteren Signalpeilvorrichtung im Wesentlichen zeitgleich ermittelt werden. Vorzugsweise wird von der Kontrolleinrichtung die Bildaufnahmevorrichtung zum Erzeugen oder Bereitstellen der Bildaufnahme ausgewählt, die dem ermittelten Fahrstreifen zugeordnet ist.

Wenn die Signalpeilvorrichtung und die weitere Signalpeilvorrichtung die jeweiligen Peilwinkel zeitversetzt ermitteln, kann anhand der zwei ermittelten Peilwinkel die Kraftfahrzeugposition auf einem der Fahrstreifen anhand deren Abweichung voneinander festgestellt werden. Auch hier wird vorzugsweise von der Kontrolleinrichtung die Bildaufnahmevorrichtung zum Erzeugen oder Bereitstellen der Bildaufnahme ausgewählt, die dem ermittelten Fahrstreifen zugeordnet ist.

Vorzugsweise wird die zu dem Optimalzeitpunkt oder innerhalb des Optimalzeitbereiches erzeugte Bildaufnahme und/ oder ein aus der Bildaufnahme gewonnenes zur Identifikation des Fahrzeugs taugliches Fahrzeugkennzeichen zusammen mit einer Information über den Ort der Störsignalerfassung und/ oder Bildaufnahme an einen Zentralrechner übertragen. Der Zentralrechner kann den Halter des Kraftfahrzeugs ermitteln und ihm ggf. eine erhöhte Maut in Rechnung stellen oder eine Verwarnung zusenden.

Die Erfindung betrifft weiterhin ein System zum bildlichen Erfassen eines Kraftfahrzeugs mit einem Funkempfänger, insbesondere einem GNSS-Empfänger, dessen bestimmungsgemäße Funktion von einer in dem Kraftfahrzeug angeordneten Störquelle beeinträchtigt ist, aufweisend: eine Signalpeilvorrichtung, welche ausgebildet ist, ein Störsignal der Störquelle zu erfassen und mindestens einen Peilwinkel der Störquelle zu ermitteln; eine Bildaufnahmevorrichtung, welche ausgebildet ist, Bildaufnahmen von Kraftfahrzeugen oder von Kraftfahrzeugbereichen zu erzeugen; und eine Peilwinkel-Verarbeitungseinrichtung, welche ausgebildet ist, anhand des ermittelten Peilwinkels, einen Optimalzeitpunkt oder einen Optimalzeitbereich zu bestimmen, an dem das Kraftfahrzeug in Relation zu der Bildaufnahmevorrichtung eine Position einnimmt, welche das Identifizieren des Kraftfahrzeugs anhand einer am Optimalzeitpunkt oder innerhalb des Optimalzeitbereiches erzeugten Bildaufnahme ermöglicht.

Das System ist mit einer Infrastruktur ausgestattet, die ermöglicht, eine Störquelle mitführende Kraftfahrzeuge zu ermitteln und sie mit ihrem jeweiligen Kennzeichen in Verbindung zu bringen. Die Verarbeitungseinheit ist vorzugsweise in die Signalpeilvorrichtung integriert d.h. ein Teil von ihr. Die Bildaufnahmevorrichtung und die Signalpeilvorrichtung können an einem Ort beispielsweise übereinander angeordnet sein. Vorzugsweise sind die Signalpeilvorrichtung und die Bildaufnahmevorrichtung fest oder starr miteinander verbunden bzw. miteinander gekoppelt. Bevorzugterweise sind sie in einem gemeinsamen Gehäuse untergebracht. Alternativ sind die Signalpeilvorrichtung und die Bildaufnahmevorrichtung beabstandet voneinander angeordnet, beispielsweise in einem Abstand von mehr als 50m, 100m oder 200m. Die Signalpeilvorrichtung und die Bildaufnahmevorrichtung können weiterhin jeweils Funkvorrichtungen aufweisen, wenn sie beabstandet angeordnet sind, um miteinander kommunizieren zu können.

Die Bildaufnahmevorrichtung und/oder die Signalpeilvorrichtung können portabel ausgebildet sein. Sie können aber auch an einem feststehenden Ort beispielsweise an eine Brücke, an einer Autobahn und/oder einer Straßenkreuzung fest installiert sein. Beispielsweise kann die Signalpeilvorrichtung portabel ausgebildet sein, beispielsweise an einem tragbaren Stativ angeordnet sein, während die Bildaufnahmevorrichtung stationär an einem feststehenden Ort angeordnet ist. Dies ist vorteilhaft, wenn die Signalpeilvorrichtung nicht mit einem Zentralrechner verbunden ist, sondern zum Auslesen der erfassten Störsignale mit einem Rechner verbunden werden muss. Alternativ kann die Bildaufnahmevorrichtung portabel ausgebildet sein, beispielsweise an einem tragbaren Stativ angeordnet sein, während die Signalpeilvorrichtung stationär an einem feststehenden Ort angeordnet ist. Dies ist beispielsweise vorteilhaft, wenn an dem Ort, an dem das System Störquellen mitführende Kraftfahrzeuge bildlich erfassen soll, Bauarbeiten stattfinden, die den Straßenverlauf ändern. Der Standort der portablen Bildaufnahmevorrichtung kann dann dem jeweiligen Straßenverlauf angepasst werden.

Weiterhin alternativ können die Signalpeilvorrichtung und die Bildaufnahmevorrichtung portabel ausgestaltet sein. Dabei können sie an einem tragbaren Stativ oder an jeweils einem eigenen tragbaren Stativ angeordnet sein. Diese Variante ist vorteilhaft, wenn eine Straße Bauabschnitten unterworfen ist, sodass sich ihr Straßenverlauf mit der Zeit ändert. Weiterhin alternativ können die Signalpeilvorrichtung und die Bildaufnahmevorrichtung stationär ausgebildet sein, so dass sie in Betrieb an einem feststehenden Ort angeordnet sind. Diese Variante ist vorteilhaft, wenn es sich bei der Straße um eine Straße mit mehreren Fahrstreifen und/oder Standstreifen handelt. Im Falle eines Defekts einer portablen oder stationär angeordneten Signalpeilvorrichtung und/oder Bildaufnahmevorrichtung ist diese jeweils durch eine portable Vorrichtung schnell und einfach ersetzbar.

Die Bildaufnahmevorrichtung und/oder die Signalpeilvorrichtung können schwenkbar sein. Vorteilhaft ist die Bildaufnahmevorrichtung schwenkbar ausgebildet. Dadurch wird eine frontseitige und rückseitige Bildaufnahme des die Störquelle mitführenden Kraftfahrzeugs mittels einer einzigen Bildaufnahmevorrichtung ermöglicht.

In einer bevorzugten Ausführungsform weist die Signalpeilvorrichtung einen Doppler-Peiler auf. Alternativ oder zusätzlich kann die Signalpeilvorrichtung einen Watson-Watt-Peiler aufweisen. Weiterhin alternativ oder zusätzlich kann die Signalpeilvorrichtung einen korrelativen Interferometerpeiler aufweisen. Beispielsweise stellt die Signalpeilvorrichtung einen Doppler-Peiler dar, der eine Vielzahl von Peilantennen aufweist, die kreisförmig auf einem Peilergehäuse angeordnet sind. Die Antennen-Ebene kann parallel oder senkrecht zur Straßenoberfläche sein, auf der sich das die Störquelle mitführende Kraftfahrzeug bewegt.

Die Bildaufnahmevorrichtung ist bevorzugt eine Kamera. Die Kamera kann ausgebildet sein, Fotos aufzunehmen. Alternativ oder zusätzlich ist sie vorzugsweise ausgelegt, Bildsequenzen oder Videosequenzen aufzunehmen. Die Bildaufnahmevorrichtung kann auch zwei Kameras in Form einer Stereokamera aufweisen, deren beide Kameras beispielsweise zum Optimalzeitpunkt jeweils eine Bildaufnahme erzeugen.

Die Peilwinkel-Verarbeitungseinrichtung ist vorzugsweise eine Datenverarbeitungseinrichtung. Es kann sich jedoch auch um eine gemeinsame Verarbeitungseinrichtung handeln, welche eine Datenverarbeitungseinrichtung und eine Bilddatenverarbeitungseinrichtung vereint.

Vorzugsweise ist die Signalpeilvorrichtung an einer Straße derart angeordnet, dass ihre Peilungsebene in einer Umgebung der Signalpeilvorrichtung parallel oder senkrecht zu der Straßenoberfläche angeordnet ist. Bei paralleler Anordnung der Peilungsebene zur Straßenoberfläche bildet der Peilungswinkel die Winkelkoordinate in einem Polarkoordinatensystem für die Straßenoberfläche. Bei senkrechter Anordnung der Peilungsebene zur Straßenoberfläche ist die Signalpeilvorrichtung vorzugsweise an einem gegenüber der Straßenoberfläche erhöhten Punkt angeordnet, beispielsweise an einer Brücke oder einer Autobahnschildhalterung montiert. Der ermittelte Peilungswinkel ist in diesem Fall null, wenn das Kraftfahrzeug sich direkt unterhalb der Signalpeilvorrichtung befindet. In einer bevorzugten Ausführungsform sind die Signalpeilvorrichtung und die Bildaufnahmevorrichtung mechanisch miteinander verbunden. Bevorzugter sind die Signalpeilvorrichtung und die Bildaufnahmevorrichtung fest oder starr miteinander verbunden. Die Kommunikationsverbindung zwischen der Signalpeilvorrichtung und der Bildaufnahmevorrichtung erfolgt vorzugsweise mittels eines Kommunikationskabels und/oder kabellos über eine Funkverbindung.

Vorzugsweise sind die Signalpeilvorrichtung und die Bildaufnahmevorrichtung mindestens 5 m, 10 m, 20 m, 50 m oder 100 m voneinander beabstandet angeordnet. Sowohl die Signalpeilvorrichtung als auch die Bildaufnahmevorrichtung können jeweils über ein Kommunikationsmodul zur drahtlosen Kommunikation miteinander verfügen.

Vorzugsweise weist das System eine Bildverarbeitungseinrichtung auf, die ausgebildet ist, aus wenigstens einer erzeugten Bildaufnahme ein Fahrzeugkennzeichen des Kraftfahrzeugs zu gewinnen.

Beispielsweise ist eine solche Bildverarbeitungseinrichtung ausgebildet, auf die wenigstens eine erzeugte Bildaufnahme eine optische Zeichenerkennung (OCR, optical character recognition) anzuwenden.

Vorzugsweise weist das System weiterhin eine Signalerfassungsvorrichtung mit einem EM-Strahlungs-Leistungs-Sensor auf, wie sie vorangehend beschrieben wurde. Insbesondere ist ein solches System dadurch gekennzeichnet, dass die Peilwinkel-Verarbeitungseinrichtung ausgebildet ist, anhand des ermittelten Peilwinkels den Optimalzeitbereich zu bestimmen, und die Bildaufnahmevorrichtung ausgebildet ist, während des Optimalzeitbereiches eine Reihe mehrerer Bildaufnahmen zu erzeugen, wobei ein solches System ferner aufweist: (a) eine Signalerfassungsvorrichtung, die ausgebildet ist, ein Störsignal der Störquelle zu erfassen und einen Zeitverlauf einer Empfangssignalstärke des Störsignals aufzunehmen und (b) eine Empfangssignalstärkezeitverlauf-Verarbeitungseinrichtung, die ausgebildet ist, anhand des aufgenommenen Zeitverlaufs der Empfangssignalstärke einen Optimalzeitpunkt oder einen eingeschränkten Optimalzeitbereich innerhalb des Optimalzeitbereiches zu bestimmen. Bevorzugt weist ein solches System auch eine Bildverarbeitungseinrichtung auf, die ausgebildet ist, aus der erzeugten Reihe der mehreren Bildaufnahmen anhand des Optimalzeitpunktes oder des eingeschränkten Optimalzeitbereiches wenigstens eine Bildaufnahme auszuwählen und aus der ausgewählten Bildaufnahme ein Fahrzeugkennzeichen des Kraftfahrzeugs zu gewinnen.

Das System kann weiterhin eine Zähleinrichtung aufweisen, die ausgelegt ist, die ermittelten Kraftfahrzeuge zu zählen und ggf. zu klassifizieren. Die Zähleinrichtung kann Teil der Peilwinkel-Verarbeitungseinrichtung sein.

Nachfolgend wird die Erfindung anhand von Ausführungsbeispielen näher erläutert. Dazu zeigen
- Fig. 1a: schematisch eine Seitenansicht einer Signalpeilvorrichtung;
- Fig. 1b: schematisch eine Draufsicht auf die in Fig. 1a gezeigte Signalpeilvorrichtung;
- Fig. 1c: symbolisch eine Seitenansicht der in Fig.1a gezeigten Signalpeilvorrichtung;
- Fig. 1d: symbolisch eine Draufsicht auf die in Fig.1b gezeigte Signalpeilvorrichtung;
- Fig. 2a und 2b: schematisch ein erfindungsgemäßes System in einer ersten Variante einer ersten Ausführungsform;
- Fig. 2c: schematisch ein erfindungsgemäßes System in einer zweiten Variante der ersten Ausführungsform;
- Fig. 3: schematisch ein weiteres erfindungsgemäßes System in einer zweiten Ausführungsform;
- Fig. 4: schematisch ein noch weiteres erfindungsgemäßes System in einer dritten Ausführungsform;
- Fig. 5: schematisch ein noch weiteres erfindungsgemäßes System in einer vierten Ausführungsform;
- Fig. 6: schematisch ein noch weiteres erfindungsgemäßes System in einer fünften Ausführungsform;
- Fig. 7: schematisch ein noch weiteres erfindungsgemäßes System in einer sechsten Ausführungsform; und
- Fig. 8a und 8b: schematisch ein noch weiteres erfindungsgemäßes System in einer siebten Ausführungsform mit einem aufgenommenen Zeitverlauf einer Empfangssignalstärke eines Störsignals in Fig. 8b.

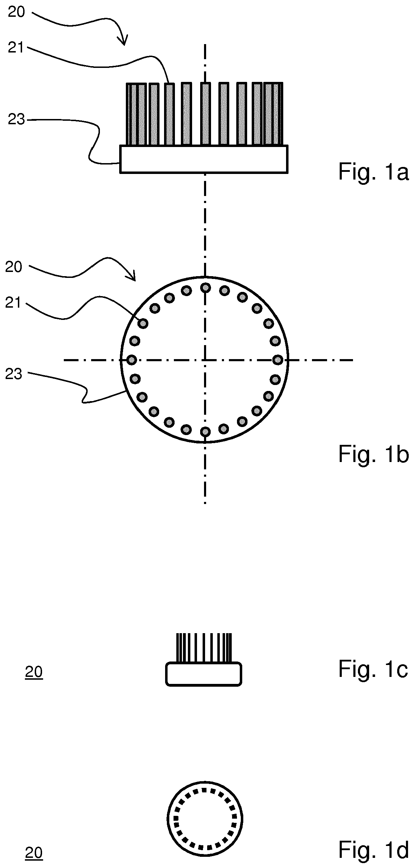

Fig. 1a zeigt schematisch eine Seitenansicht einer Signalpeilvorrichtung. Die Signalpeilvorrichtung 20 ist ein Doppler-Peiler. Die Signalpeilvorrichtung 20 weist ein Peilergehäuse 23 und eine Vielzahl von Peilantennen 21 auf, die im Wesentlichen parallel zueinander angeordnet sind und sich im Wesentlichen senkrecht von dem Peilergehäuse 23 weg erstrecken. Fig. 1b zeigt schematisch eine Draufsicht auf die in Fig. 1a gezeigte Signalpeilvorrichtung 20. Das Peilergehäuse 23 weist in Draufsicht eine kreisförmige Gestalt auf. Die Vielzahl von Peilantennen 21 ist in Draufsicht äquidistant kreisförmig auf dem Peilergehäuse 23 angeordnet.

Jede Peilantenne 21 ist selbst eine Dipolantenne. Beim Peilprozess werden die Peilantennen 21 entsprechend ihrer Anordnung nacheinander periodisch abgefragt. Anders ausgedrückt setzt sich das Peilsignal, welches die Signalpeilvorrichtung 20 erzeugt abschnittsweise aus Empfangssignalen zusammen, welche die Peilantennen 21 empfangen. Auf diese Weise wird eine kreisförmige Rotation einer einzelnen Dipolantenne um eine feste Achse simuliert. Das aus den Empfangssignalen der Peilantennen 21 zusammengesetzte Peilsignal weist eine Phasenverschiebung auf, welche abhängig von der Winkelposition der Signalquelle, in diesem Fall einer Störquelle, ist. Indem das zusammengesetzte Peilsignal ausgewertet wird, kann ein Peilungswinkel ermittelt werden, aus die Signalpeilvorrichtung 20 das Störsignal empfängt.

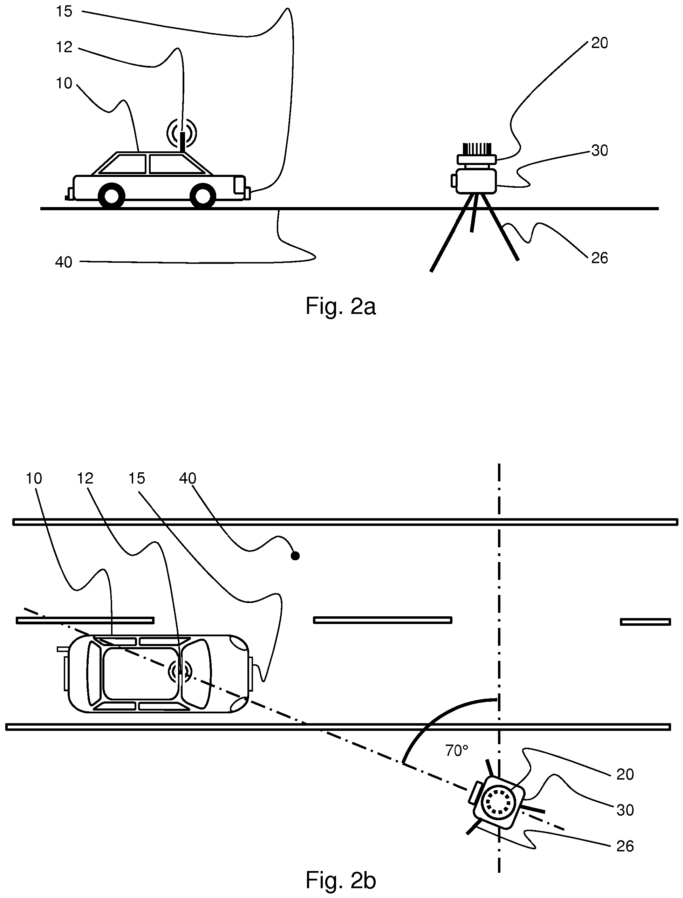

Fig. 1c zeigt symbolisch eine Seitenansicht der in Fig.1a gezeigten Signalpeilvorrichtung 20; während Fig. 1d symbolisch eine Draufsicht auf die in Fig.1b gezeigte Signalpeilvorrichtung 20 darstellt. Die in Fig. 1c und 1d gezeigte symbolische Darstellung der Signalpeilvorrichtung 20 wird in den Fig. 2a bis 8b zur Darstellung der Signalpeilvorrichtung 20 verwendet.

Fig. 2a bis 2c zeigen schematisch ein Verfahren zum bildlichen Erfassen eines Kraftfahrzeugs unter Verwendung einer ersten Ausführungsform des erfindungsgemäßen Systems. Das System ist in der ersten Ausführungsform als ein portables Gesamtsystem ausgestaltet, das an einem Straßenrand aufstellbar ist. Das System weist eine Signalpeilvorrichtung 20 in Form des in den Fig. 1a bis 1d gezeigten Doppler-Peilers und eine Bildaufnahmevorrichtung 30 in Form einer Kamera auf, die übereinander auf einem Stativ 26 angeordnet sind. Die Bildaufnahmevorrichtung 30 ist ausgelegt, in Fahrtrichtung eines Kraftfahrzeugs 10, d.h. nach einer Passage des Kraftfahrzeugs 10 an der Bildaufnahmevorrichtung 20 vorbei und/ oder entgegen Fahrtrichtung des Kraftfahrzeugs 10, d.h. vor der Passage des Kraftfahrzeugs 10 an der Bildaufnahmevorrichtung 20 vorbei bzw. während der Fahrt des Kraftfahrzeugs 10 auf die Bildaufnahmevorrichtung 20 zu, ein Bild oder eine Bildfolge des Kraftfahrzeugs 10 aufzunehmen. Die Antennen-Ebene der Peilantennen 21 der Signalpeilvorrichtung 20 ist parallel zur Straßenebene (nicht gezeigt).

In Fig. 2a ist in Seitenansicht gezeigt, wie ein Kraftfahrzeug 10, das eine Störquelle 12 mit sich führt, auf einer Straßenoberfläche 40 fährt. Es hat die Signalpeilvorrichtung 20 und die Bildaufnahmevorrichtung 30 noch nicht passiert. Die Störquelle 12 ist üblicherweise im Kraftfahrzeug 10 nahe eines GNSS-Empfängers angeordnet, um den GNSS-Empfänger zu stören. In Fig. 2b ist eine Draufsicht auf die Straßenoberfläche 40 der in Fig. 2a gezeigten Situation gezeigt. Mittels der Signalpeilvorrichtung 20 wird ein Störsignal der Störquelle 12 in dem Kraftfahrzeug 10 erfasst und ein Peilwinkel ϕ von 70° ermittelt. Bei Unterschreiten eines vorbestimmten Peilwinkels, in diesem Fall von 70°, gibt die Signalpeilvorrichtung 20 ein Signal (nicht gezeigt) an die Bildaufnahmevorrichtung 30 zur unverzögerten Bildaufnahme (nicht gezeigt) des frontseitigen Fahrzeugkennzeichens 15 des Kraftfahrzeugs 10 entgegen der Fahrtrichtung und löst mit diesem Auslösesignal die Bildaufnahme aus.

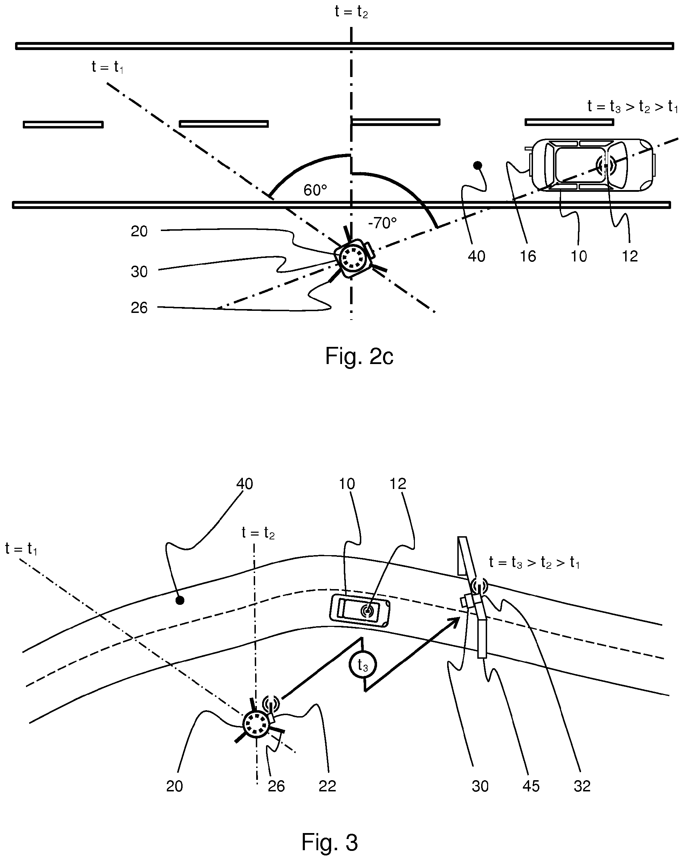

In Fig. 2c ist gezeigt, wie die Signalpeilvorrichtung 20 an einem Zeitpunkt t₁ einen Peilwinkel ϕ von 60° erfasst und an einem Zeitpunkt t₂ einen weiteren Peilwinkel ϕ von 0° erfasst. Aus den zwei erfassten Peilwinkeln zu den zwei verschiedenen Zeitpunkten t₁ und t₂ ermittelt die Signalpeilvorrichtung 20 einen Optimalzeitpunkt t₃, an dem das Kraftfahrzeug 10 nach Passieren der Signalpeilvorrichtung 20 in Relation zu der Bildaufnahmevorrichtung 30 eine Position einnimmt, welche das Identifizieren des Kraftfahrzeugs 10 anhand der am Optimalzeitpunkt t₃ erzeugten Bildaufnahme ermöglicht. Die Signalpeilvorrichtung 20 sendet entweder i) diesen Optimalzeitpunkt t₃ an die mit der Signalpeilvorrichtung 20 synchronisierte Bildaufnahmevorrichtung 30, damit die Bildaufnahmevorrichtung zum Optimalzeitpunkt t₃ eine Bildaufnahme durchführt, oder ii) zum Optimalzeitpunkt t₃ ein Signal an die Bildaufnahmevorrichtung 30 zur unverzögerten Bildaufnahme des rückseitigen Fahrzeugkennzeichens 16.

Fig. 3 zeigt schematisch ein weiteres erfindungsgemäßes System in einer zweiten Ausführungsform. Das System weist eine portable Signalpeilvorrichtung 20 und eine Bildaufnahmevorrichtung 30 auf. Die Signalpeilvorrichtung 20 in Form des in Fig.1 bis 1d gezeigten Doppler-Peilers ist an einem Straßenrand angeordnet. Die Bildaufnahmevorrichtung 30 ist an einer Brücke 45, beispielsweise 300 m oder mehr von der portablen Signalpeilvorrichtung 20 in Fahrtrichtung entfernt über einer Straßenoberfläche 40 angeordnet. Ein Kraftfahrzeug 10 mit einer Störquelle 12 fährt auf der Straßenoberfläche 40 in der durch das Kraftfahrzeug 10 angedeuteten Fahrtrichtung, so dass es an einem Zeitpunkt t=t₁ einen Ort an der Straßenoberfläche 40 und an einem Zeitpunkt t=t₂ einen weiteren Ort an der Straßenoberfläche 40 passiert. Diese Orte sind in der Fig. 3 schematisch mittels punktgestrichelter Linien angedeutet. Die Signalpeilvorrichtung 20 erfasst an dem Zeitpunkt t₁ einen Peilwinkel (nicht gezeigt) und an dem Zeitpunkt t₂ einen weiteren Peilwinkel ϕ (nicht gezeigt).

Aus den zwei erfassten Peilwinkeln zu den zwei verschiedenen Zeitpunkten t₁ und t₂ ermittelt die Signalpeilvorrichtung 20 einen Optimalzeitpunkt t₃, an dem das Kraftfahrzeug 10 in Relation zu der Bildaufnahmevorrichtung 30 eine Position einnimmt, welche das Identifizieren des Kraftfahrzeugs 10 anhand der am Optimalzeitpunkt erzeugten Bildaufnahme ermöglicht. Die Signalpeilvorrichtung 20 sendet entweder i) diesen Optimalzeitpunkt t₃ an die die mit der Signalpeilvorrichtung 20 synchronisierte Bildaufnahmevorrichtung 30, damit die Bildaufnahmevorrichtung zum Optimalzeitpunkt t₃ eine Bildaufnahme durchführt, oder ii) zum Optimalzeitpunkt t₃ ein Signal an die Bildaufnahmevorrichtung 30 zur unverzögerten Bildaufnahme des rückseitigen Fahrzeugkennzeichens, so dass das Kraftfahrzeug oder zumindest sein frontseitiges Fahrzeugkennzeichen (nicht gezeigt) entgegen der Fahrtrichtung per Foto oder Video aufgenommen wird.

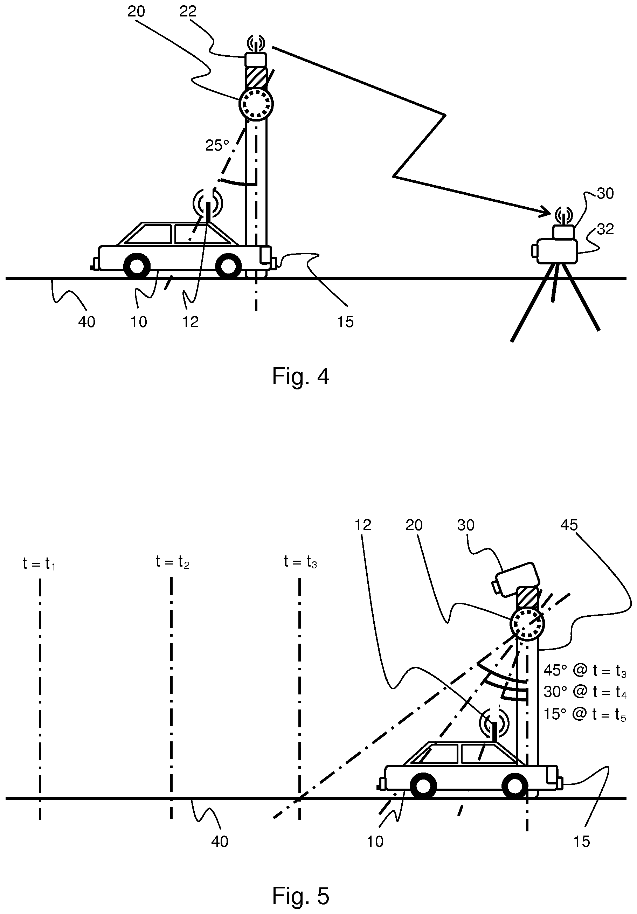

Fig. 4 zeigt schematisch ein noch weiteres erfindungsgemäßes System in einer dritten Ausführungsform. Das System weist eine Signalpeilvorrichtung 20 und eine portable Bildaufnahmevorrichtung 30 in Form einer Kamera auf. Eine Signalpeilvorrichtung 20 in Form des in Fig. 1a bis 1d gezeigten Doppler-Peilers ist an einer Brücke 45 über einer Straßenoberfläche 40 angeordnet. Eine Antennen-Ebene der Signalpeilvorrichtung 20 ist senkrecht zur Straßenoberfläche 40 und parallel zur Fahrtrichtung eines Kraftfahrzeugs 10 orientiert. Die portable Bildaufnahmevorrichtung 30 ist an einem Straßenrand (nicht gezeigt) etwa 50 m von der Brücke 45 in Fahrtrichtung des Kraftfahrzeugs 10 entfernt angeordnet. Das Kraftfahrzeug 10 führt eine Störquelle 12 mit, deren Störsignal von der Signalpeilvorrichtung 20 erfasst wird. Sie ermittelt einen Peilwinkel (nicht gezeigt) der Störquelle 12. Bei Erfassung eines vorbestimmten Peilwinkels von 25° löst die Signalpeilvorrichtung 20 über eine Peilerfunkvorrichtung 22 per Funk via Auslösesignal eine Bildaufnahme über die portable Bildaufnahmevorrichtung 30 aus, deren Kamerafunkvorrichtung 32 von der Peilerfunkvorrichtung 22 das Auslösesignal empfängt.

Fig. 5 zeigt schematisch ein noch weiteres erfindungsgemäßes System in einer vierten Ausführungsform. Das System ist an einer Brücke 45 installiert. Das System weist eine Signalpeilvorrichtung 20 in Form des in Fig. 1a bis 1d gezeigten Doppler-Peilers und eine Bildaufnahmevorrichtung 30 in Form einer Kamera auf, die übereinander an der Brücke 45 angeordnet sind. Eine Antennen-Ebene der Signalpeilvorrichtung 20 ist senkrecht zu einer Straßenoberfläche 40 angeordnet. Die Bildaufnahmevorrichtung 30 macht in vorbestimmten Zeitabständen, beispielsweise sekündlich, zu den Zeitpunkten t=t₁, t=t₂, t=t₃ Bildaufnahmen von Kraftfahrzeugen, von denen das eine Störquelle 12 mitführende Kraftfahrzeug 10 gezeigt ist. Von der Störquelle 12 ausgesendete Störsignale werden von der Signalpeilvorrichtung 20 zum Zeitpunkt t=t₃ mit einem Peilwinkel von 45°, zu einem Zeitpunkt t=t₄ mit einem Peilwinkel von 30° und zu einem Zeitpunkt t=t₅ mit einem Peilwinkel von 15°erfasst. Durch Extrapolation der Positionen des die Störquelle 12 mitführenden Kraftfahrzeugs 10 zu den erfassten Zeiten t=t₃, t= t₄ und t=t₅ bei den entsprechenden Peilwinkeln wird beispielsweise der Zeitpunkt t=t₂ nachträglich für die Bildaufnahme des Kraftfahrzeugs 10 als Optimalzeitpunkt bestimmt. Folglich wird die zu dem Zeitpunkt t= t₂ als Optimalzeitpunkt erzeugte Bildaufnahme durch eine Datenverarbeitungseinrichtung oder eine Bildverarbeitungseinrichtung ausgewählt.

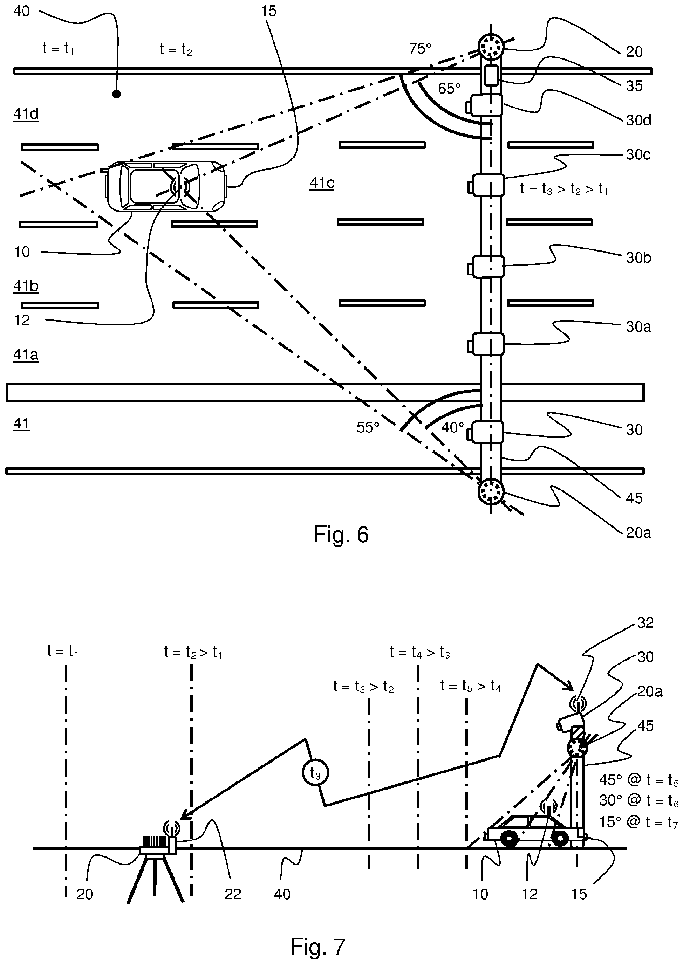

Fig. 6 zeigt schematisch ein noch weiteres erfindungsgemäßes System in einer fünften Ausführungsform. Ein eine Störquelle 12 mitführendes Kraftfahrzeug 10 fährt auf einem Fahrstreifen 41c einer mehrspurigen Straße mit vier Fahrstreifen 41a-41d und einer Standspur 41, über der eine Brücke 45 angeordnet ist. Das System ist an der Brücke 45 angeordnet. Es weist eine Signalpeilvorrichtung 20 und eine weitere Signalpeilvorrichtung 25 in Form der in Fig. 1a bis 1d gezeigten Doppler-Peilern auf, die an den beiden äußeren Enden der Brücke 45 angeordnet sind. Das System weist weiterhin eine Bildaufnahmevorrichtung 30 und weitere Bildaufnahmevorrichtungen 30a-30d auf, je eine pro Fahrstreifen 41a-41d und eine für die Standspur 41. Die Antennen-Ebenen der Signalpeilvorrichtung 20 und der weiteren Signalpeilvorrichtung 20a sind jeweils parallel zur Straßenoberfläche 40 angeordnet. Ein Störsignal der Störquelle 12 wird von der Signalpeilvorrichtung 20 und der weiteren Signalpeilvorrichtung 20a erfasst und ein Peilwinkel zum Zeitpunkt t=t₁ von 75° bzw. 55° und zum Zeitpunkt t=t₂ von 65° bzw. 40° ermittelt. Die in zeitlicher Synchronisationen von beiden Signalpeilvorrichtungen 20, 20a gemessenen zeitabhängigen Folgen von Peilwinkeln der bewegten Störquelle 12 werden von einer Peilwinkel-Verarbeitungseinrichtung (nicht dargestellt) einer Kontrolleinrichtung 35 ausgewertet, um zu bestimmen, auf welchem Fahrstreifen 41 das Kraftfahrzeug 10 mit der Störquelle 12 fährt und diejenige Bildaufnahmevorrichtung 30c zum Zeitpunkt t=t₃ auszulösen, die dem bestimmten Fahrstreifen 41c zugeordnet ist.

Fig. 7 zeigt schematisch ein noch weiteres erfindungsgemäßes System in einer sechsten Ausführungsform. Das System weist eine portable Signalpeilvorrichtung 20 auf, die straßenseitig angeordnet ist und eine Peilerfunkvorrichtung 22 aufweist. Die Antennen-Ebene der Signalpeilvorrichtung 20 ist parallel zu einer Straßenoberfläche ausgerichtet, entlang der ein Kraftfahrzeug 10 fährt, das eine Störquelle 12 mitführt. Weiterhin weist das System eine weitere Signalpeilvorrichtung 20b auf, die an einer Brücke 45 angeordnet ist und deren Antennen-Ebene senkrecht zur Straßenoberfläche 40 ausgerichtet ist. An der Brücke 45 ist weiterhin eine Bildaufnahmevorrichtung 30 in Form einer Kamera angeordnet, die eine Kamerafunkvorrichtung 32 aufweist.

Die Kamerafunkvorrichtung 32 ist ausgelegt, Funksignale von der Peilerfunkvorrichtung 22 zu empfangen. Mittels der Signalpeilvorrichtung 20 wird ein Störsignals der Störquelle 12 zu den Zeitpunkten t=t₁, t=t₂, t=t₃, t=t₄ und t=t₅ erfasst, bei denen sich die Störquelle 12 an den jeweils durch die punktgestrichelten Linien angedeuteten Positionen befindet. Ab einem Zeitpunkt t=t₃ wird eine Bildserie mehrerer Bilder oder eine Video-Aufnahme über eine vorbestimmte Zeitdauer von der Bildaufnahmevorrichtung 30 durchgeführt, wozu sie von der Signalpeilvorrichtung 20 mittels der Kamerafunkvorrichtung 32 angewiesen wird. Die weitere Signalpeilvorrichtung 50 ermittelt mindestens einen Peilwinkel der Störquelle 12 zu den Zeitpunkten t=t₅ von 45°, t=t₆ von 30°und t=t₇ von 15°. Anhand der ermittelten Peilwinkel ermittelt eine Peilwinkel-Verarbeitungseinrichtung (nicht gezeigt) einen Optimalzeitpunkt oder einen Optimalzeitbereich, an dem das Kraftfahrzeug 10 in Relation zu der Bildaufnahmevorrichtung 30 eine Position einnimmt, welche das Identifizieren des Kraftfahrzeugs 10 anhand einer am Optimalzeitpunkt oder innerhalb des Optimalzeitbereiches erzeugten Bildaufnahme ermöglicht. Die Signalpeilvorrichtung 50 bzw. eine Peilwinkel-Verarbeitungseinrichtung wählt ein oder mehrere Bildaufnahmen der Bildserie oder Videoaufnahme z. B. unmittelbar vor t₄ und/oder unmittelbar nach t₄ zur Weiterleitung an einen Zentralrechner aus.

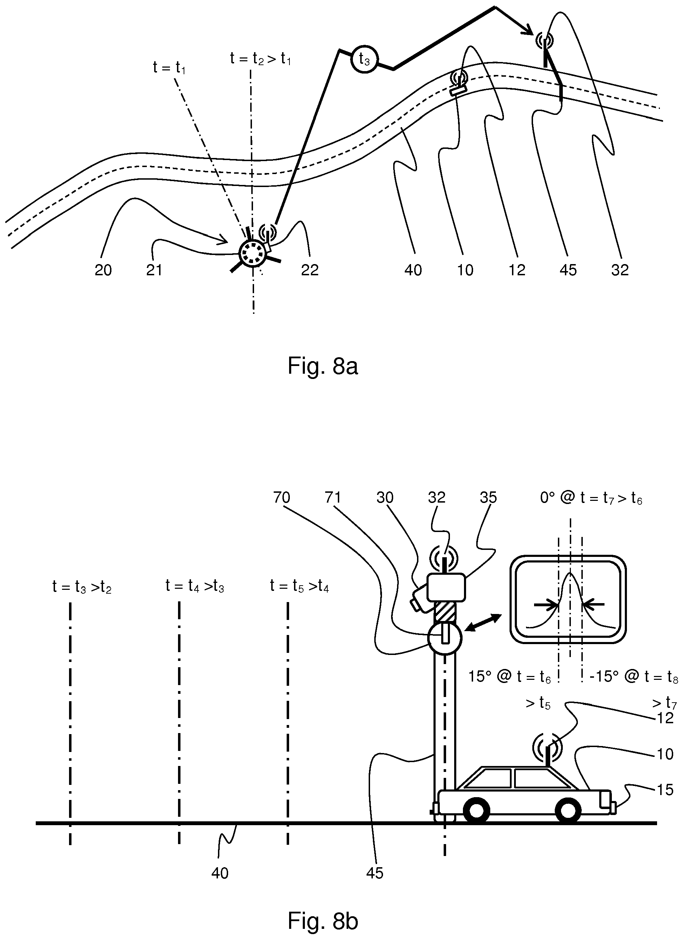

Fig. 8a und 8b zeigen schematisch ein noch weiteres erfindungsgemäßes System in einer siebten Ausführungsform, wobei Fig. 8b zusätzlich einen Zeitverlauf einer Empfangssignalstärke eines Störsignals zeigt. Ein eine Störquelle 12 mitführendes Kraftfahrzeug 10 fährt auf einer Straßenoberfläche 40 einer Straße. Diese Situation ist in Fig. 8a in Draufsicht und in Fig. 8b in Seitenansicht gezeigt. Das System weist eine portable Signalpeilvorrichtung 20 mit einer Peilantenne 21 und einer Peilerfunkvorrichtung 22, eine an einer die Straße überspannenden Brücke 45 angeordnete Signalerfassungsvorrichtung 70 und eine an der Brücke 45 angeordnete Bildaufnahmevorrichtung 30 mit einer Kamerafunkvorrichtung 32 auf.

Mittels der Signalpeilvorrichtung 20, beispielsweise eines Doppler-Peilers, wird ein Störsignal der Störquelle 12 erfasst und mindestens ein Peilwinkel der Störquelle 12 ermittelt und anhand des ermittelten Peilwinkels ein Bildreihenaufnahme-Startzeitpunkt t₃ bestimmt, der an die Bildaufnahmevorrichtung 30 übermittelt wird. Die Bildaufnahmevorrichtung 30 wird in Abhängigkeit von dem Bildreihenaufnahme-Startzeitpunkt t₃ ausgelöst, die Reihe mehrerer Bildaufnahmen zu erzeugen.

Die Signalerfassungsvorrichtung 70 erfasst ebenfalls das Störsignal der Störquelle 12 und nimmt Zeitverläufe einer Empfangssignalstärke des Störsignals auf, von denen einer in Fig. 8b gezeigt ist. Die Signalerfassungsvorrichtung 70 bestimmt, anhand des aufgenommenen Zeitverlaufs der Empfangssignalstärke des Störsignals, einen Optimalzeitpunkt, an dem das Kraftfahrzeug 10, das die Störquelle 12 mit sich führt, in Relation zu der Bildaufnahmevorrichtung 30 eine Position einnimmt, die das Identifizieren des Kraftfahrzeugs 10 anhand einer am Optimalzeitpunkt erzeugten Bildaufnahme der Bildaufnahmevorrichtung 30 von dem Kraftfahrzeug 10 ermöglicht, mittels einer Empfangssignalstärkezeitverlauf-Verarbeitungseinrichtung (nicht gezeigt) und wählt das am Optimalzeitpunkt erzeugte Bild aus.

Die stärkste Empfangssignalstärke des Störsignals empfängt die Signalerfassungsvorrichtung 70, wenn das Kraftfahrzeug 10 unter der Brücke 45 durchfährt. Nach diesem Maximum sinkt die Empfangssignalstärke, und die Signalerfassungsvorrichtung 70 kann die Bildaufnahmevorrichtung 30 beispielsweise mit dem Enden der Dauer der Halbwertsbreite Δt_{FWHM} zum Zeitpunkt t=t₈ anweisen, das Aufnehmen von Bildern zu beenden. In einer alternativen Variante kann die Signalerfassungsvorrichtung 70 die Bildaufnahmevorrichtung 30 unabhängig von dem Zeitverlauf der Empfangssignalstärke anweisen, das Aufnehmen von Bildern zu beenden, wenn die Dauer eines durch die Signalpeilvorrichtung bestimmten Optimalzeitbereiches, dessen Beginn durch den Bildreihenaufnahme-Startzeitpunkt t₃ definiert ist, abgelaufen ist. Die Signalerfassungsvorrichtung 70 kann die Bildaufnahmevorrichtung 30 anweisen, die am Optimalzeitpunkt erzeugte Bildaufnahme an eine Zentrale (nicht gezeigt) weiterzuleiten.

### Bezugszeichenliste:

- 10: Kraftfahrzeug
- 12: Störquelle
- 15: frontseitiges Kraftfahrzeugkennzeichen
- 16: rückseitiges Kraftfahrzeugkennzeichen

- 20: Signalpeilvorrichtung
- 20a: weitere Signalpeilvorrichtung
- 20b: weitere Signalpeilvorrichtung
- 21: Peilantenne
- 22: Peilerfunkvorrichtung
- 23: Peilergehäuse
- 26: Stativ

- 30: Bildaufnahmevorrichtung
- 30a-d: weitere Bildaufnahmevorrichtung(en)
- 32: Kamerafunkvorrichtung
- 35: Kontrolleinrichtung

- 40: Straßenoberfläche
- 41: Standstreifen
- 41a-d: Fahrstreifen
- 45: Brücke

- 70: Signalerfassungsvorrichtung
- 71: Empfangsantenne der Signalerfassungsvorrichtung 70

- ϕ: Peilwinkel
- ψ: weiterer Peilwinkel

## Patentansprüche

1. Verfahren zum bildlichen Erfassen eines Kraftfahrzeugs (10), das eine Störquelle (12) mit sich führt, die geeignet ist, die bestimmungsgemäße Funktion eines Funksignalempfängers zu beeinträchtigen, mittels wenigstens einer an einer Straße angeordneten Signalpeilvorrichtung (20) und wenigstens einer Bildaufnahmevorrichtung (30), umfassend die folgenden Schritte:
- Erfassen eines Störsignals der Störquelle (12) und Ermitteln mindestens eines Peilwinkels (ϕ) der Störquelle (12) mittels der Signalpeilvorrichtung (20);
- Bestimmen, anhand des ermittelten Peilwinkels (ϕ), eines Optimalzeitpunktes oder eines Optimalzeitbereiches, an dem das Kraftfahrzeug (10) in Relation zu der Bildaufnahmevorrichtung (30) eine Position einnimmt, welche das Identifizieren des Kraftfahrzeugs (10) anhand wenigstens einer am Optimalzeitpunkt oder innerhalb des Optimalzeitbereiches erzeugten Bildaufnahme ermöglicht, mittels einer Peilwinkel-Verarbeitungseinrichtung; und
- Erzeugen wenigstens einer Bildaufnahme von dem Kraftfahrzeug (10) oder von einem Kraftfahrzeugbereich des Kraftfahrzeugs (10) zu dem Optimalzeitpunkt oder innerhalb des Optimalzeitbereiches mittels der Bildaufnahmevorrichtung (30).

2. Verfahren nach Anspruch 1, **dadurch gekennzeichnet, dass** zu dem Optimalzeitpunkt oder während des Optimalzeitbereiches ein Bildauslösesignal an die Bildaufnahmevorrichtung (30) übertragen wird, und das Erzeugen der Bildaufnahme von dem Kraftfahrzeug (10) oder von dem Kraftfahrzeugbereich des Kraftfahrzeugs (10) zu dem Optimalzeitpunkt oder innerhalb des Optimalzeitbereiches in Folge des Empfangs des Bildauslösesignals in der Bildaufnahmevorrichtung ausgelöst wird.

3. Verfahren nach Anspruch 1, **dadurch gekennzeichnet, dass** der Optimalzeitpunkt oder der Optimalzeitbereich an die Bildaufnahmevorrichtung (30) mitgeteilt wird, wobei die Bildaufnahmevorrichtung (30) infolge dessen die Bildaufnahme von dem Kraftfahrzeug (10) oder von dem Kraftfahrzeugbereich des Kraftfahrzeugs (10) zu dem Optimalzeitpunkt oder innerhalb des Optimalzeitbereiches erzeugt.

4. Verfahren nach Anspruch 1, **dadurch gekennzeichnet, dass** mittels der Bildaufnahmevorrichtung (30) eine Reihe von mehreren Bildaufnahmen erzeugt wird, und eine Peilwinkel-Verarbeitungseinrichtung aus der Reihe von mehreren Bildaufnahmen wenigstens eine Bildaufnahme auswählt, die zu dem Optimalzeitpunkt oder innerhalb des Optimalzeitbereiches erzeugt wurde.

5. Verfahren nach Anspruch 4, **dadurch gekennzeichnet, dass** anhand des ermittelten Peilwinkels mittels der Peilwinkel-Verarbeitungseinrichtung ein Optimalzeitbereich bestimmt wird und die Bildaufnahmevorrichtung (30) in Abhängigkeit von dem Optimalzeitbereich ausgelöst wird, während des Optimalzeitbereiches die Reihe mehrerer Bildaufnahmen zu erzeugen.

6. Verfahren nach Anspruch 5, **gekennzeichnet durch** die folgenden Schritte:
- Erfassen eines Störsignals der Störquelle (12) und Aufnehmen wenigstens eines Zeitverlaufs einer Empfangssignalstärke des Störsignals mittels einer Signalerfassungsvorrichtung (70); und
- Bestimmen eines Optimalzeitpunktes oder eines eingeschränkten Optimalzeitbereiches innerhalb des Optimalzeitbereiches anhand des aufgenommenen Zeitverlaufs der Empfangssignalstärke, mittels einer Peilwinkel-Verarbeitungseinrichtung.

7. Verfahren nach einem der vorangehenden Ansprüche, **dadurch gekennzeichnet, dass** wenigstens eine erzeugte Bildaufnahme zur Identifizierung des Kraftfahrzeugs (10) einer optischen Zeichenerkennung (OCR) einer Bildverarbeitungseinrichtung unterworfen wird.

8. Verfahren nach einem der vorangehenden Ansprüche, **dadurch gekennzeichnet, dass** der Optimalzeitpunkt oder der Optimalzeitbereich mittels der Peilwinkel-Verarbeitungseinrichtung als der Zeitpunkt oder Zeitbereich bestimmt wird, an dem oder während dessen der Peilwinkel (ϕ) einen vorbestimmten Schwellwinkel unterschreitet oder überschreitet oder innerhalb eines vorbestimmten Winkelbereichs liegt.

9. Verfahren nach einem der Ansprüche 1 bis 7, **dadurch gekennzeichnet, dass** zwei oder mehr Peilwinkel (ϕ, ϕ') an unterschiedlichen Zeitpunkten ermittelt werden, wobei mittels der Peilwinkel-Verarbeitungseinrichtung der Optimalzeitpunkt oder der Optimalzeitbereich mittels einer Extrapolation oder Interpolation aus den ermittelten Peilwinkeln (ϕ, ϕ') bestimmt wird.

10. Verfahren nach Anspruch 9, **dadurch gekennzeichnet, dass** ein Straßenverlauf einer Straße, auf dem sich das Kraftfahrzeug bewegt, in die Extrapolation oder die Interpolation einbezogen wird.

11. Verfahren nach einem der vorangehenden Ansprüche, **dadurch gekennzeichnet, dass** ein weiterer Peilwinkel (ψ) derselben Störquelle durch eine weitere Signalpeilvorrichtung (25) ermittelt wird, wobei aus mehreren Bildaufnahmevorrichtungen (30, 35) einer Kontrolleinrichtung die Bildaufnahmevorrichtung (30) zum Erzeugen der Bildaufnahme oder zum Bereitstellen einer erzeugten Bildaufnahme durch die Kontrolleinrichtung ausgewählt wird.

12. Verfahren nach einem der vorangehenden Ansprüche, **dadurch gekennzeichnet, dass** die zu dem Optimalzeitpunkt oder innerhalb des Optimalzeitbereiches erzeugte Bildaufnahme und/ oder ein aus der Bildaufnahme gewonnenes zur Identifikation des Fahrzeugs taugliches Fahrzeugkennzeichen zusammen mit einer Information über den Ort der Störsignalerfassung und/ oder Bildaufnahme an einen Zentralrechner übertragen wird.

13. System zum bildlichen Erfassen eines Kraftfahrzeugs mit einem GNSS-Empfänger, dessen bestimmungsgemäße Funktion von einer in dem Kraftfahrzeug (10) angeordneten Störquelle (12) beeinträchtigt ist, aufweisend:
- eine an einer Straße angeordnete Signalpeilvorrichtung (20), welche ausgebildet ist, ein Störsignal der Störquelle (12) zu erfassen und mindestens einen Peilwinkel (ϕ) der Störquelle (12) zu ermitteln;
- eine Bildaufnahmevorrichtung (30), welche ausgebildet ist, Bildaufnahmen von Kraftfahrzeugen oder von Kraftfahrzeugbereichen zu erzeugen; und
- eine Peilwinkel-Verarbeitungseinrichtung, welche ausgebildet ist, anhand des ermittelten Peilwinkels (ϕ), einen Optimalzeitpunkt oder einen Optimalzeitbereich zu bestimmen, an dem das Kraftfahrzeug in Relation zu der Bildaufnahmevorrichtung (30) eine Position einnimmt, welche das Identifizieren des Kraftfahrzeugs (10) anhand einer am Optimalzeitpunkt oder innerhalb des Optimalzeitbereiches erzeugten Bildaufnahme ermöglicht.

14. System nach Anspruch 13, **gekennzeichnet durch** eine Bildverarbeitungseinrichtung, die ausgebildet ist, aus wenigstens einer erzeugten Bildaufnahme ein Fahrzeugkennzeichen des Kraftfahrzeugs (10) zu gewinnen.

15. System nach Anspruch 13 oder 14, **dadurch gekennzeichnet, dass**
- die Peilwinkel-Verarbeitungseinrichtung ausgebildet ist, anhand des ermittelten Peilwinkels (ϕ) den Optimalzeitbereich zu bestimmen, und
- die Bildaufnahmevorrichtung ausgebildet ist, während des Optimalzeitbereiches eine Reihe mehrerer Bildaufnahmen zu erzeugen, wobei das System nach Anspruch 13 ferner aufweist:
- eine Signalerfassungsvorrichtung (70), die ausgebildet ist, ein Störsignal der Störquelle zu erfassen und einen Zeitverlauf einer Empfangssignalstärke des Störsignals aufzunehmen,
- eine Empfangssignalstärkezeitverlauf-Verarbeitungseinrichtung, die ausgebildet ist, anhand des aufgenommenen Zeitverlaufs der Empfangssignalstärke einen Optimalzeitpunkt oder einen eingeschränkten Optimalzeitbereich innerhalb des Optimalzeitbereiches zu bestimmen, und
- eine Bildverarbeitungseinrichtung, die ausgebildet ist, aus der erzeugten Reihe der mehreren Bildaufnahmen anhand des Optimalzeitpunktes oder des eingeschränkten Optimalzeitbereiches wenigstens eine Bildaufnahme auszuwählen und aus der ausgewählten Bildaufnahme ein Fahrzeugkennzeichen des Kraftfahrzeugs (10) zu gewinnen.

16. Verfahren nach einem der Ansprüche 1 bis 12 oder System nach einem der Ansprüche 13 bis 15, **dadurch gekennzeichnet, dass** die Signalpeilvorrichtung (20) einen Doppler-Peiler, einen Watson-Watt-Peiler und/oder einen korrelativen Interferometerpeiler aufweist.

## Claims

1. A method for visual detection of a motor vehicle (10) which carries with it a source of interference (12) which is capable of impairing the intended function of a radio signal receiver, by means of at least one signal bearing device (20) arranged on a road and at least one image acquisition device (30), comprising the following steps:
- detecting an interference signal of the interference source (12) and identifying at least one bearing angle (A) of the interference source (12) by means of the signal bearing device (20);
- determining, on the basis of the identified bearing angle (ϕ), an optimum time or an optimum time range at which the motor vehicle (10) occupies in relation to the image acquisition device (30) a position which permits the identification of the motor vehicle (10) on the basis of at least one image acquisition generated at the optimum time or during the optimum time range by means of a bearing angle processing device; and
- generating at least one image acquisition of the motor vehicle (10) or of a motor vehicle area of the motor vehicle (10) at the optimum time or during the optimum time range by means of the image acquisition device (30).

2. The method according to claim 1, **characterized in that** at the optimum time or during the optimum time range an image trigger signal is transmitted to the image acquisition device (30), and the generation of the image acquisition of the motor vehicle (10) or from the motor vehicle area of the motor vehicle (10) at the optimum time or during the optimum time range is triggered as a result of receiving the image trigger signal in the image acquisition device.

3. The method according to claim 1, **characterized in that** the optimum time or the optimum time range is communicated to the image acquisition device (30), wherein the image acquisition device (30) generates as a result of which the image acquisition of the motor vehicle (10) or of the motor vehicle area of the motor vehicle (10) at the optimum time or during the optimum time range.

4. The method according to claim 1, **characterized in that** by means of the image acquisition device (30) a series of several image acquisitions is generated, and a bearing angle processing device selects from the series of several image acquisitions at least one image acquisition which was generated at the optimum time or during the optimum time range.

5. The method according to claim 4, **characterized in that** an optimum time range is determined on the basis of the identified bearing angle by means of the bearing angle processing device and the image acquisition device (30) is triggered, depending on the optimum time range during the optimum time range, to generate the series of several image acquisitions.

6. The method according to claim 5, **characterized by** the following steps:
- detecting an interference signal of the interference source (12) and recording at least one time course of a receive signal strength of the interference signal by means of a signal detection device (70); and
- determining an optimum time or a limited optimum time range within the optimum time range on the basis of the recorded time course of the receive signal strength by means of a bearing angle processing device.

7. The method according to one of the preceding claims, **characterized in that** at least one generated image acquisition for the identification of the motor vehicle (10) is subjected to an optical character recognition (OCR) of an image processing device.

8. The method according to one of the preceding claims, **characterized in that** the optimum time or the optimum time range is determined by means of the bearing angle processing device as the time or time range at which or during which the bearing angle (ϕ) falls below or exceeds a predetermined threshold angle or is within a predetermined angle range.

9. The method according to any one of claims 1 to 7, **characterized in that** two or more bearing angles (ϕ, ϕ') are identified at different times, wherein by means of the bearing angle processing device the optimum time or the optimum time range is determined by means of extrapolation or interpolation from the identified bearing angles (ϕ, ϕ').

10. The method according to claim 9, **characterized in that** a road course of a road on which the motor vehicle is moving is included in the extrapolation or interpolation.

11. The method according to one of the preceding claims, **characterized in that** a further bearing angle (ψ) of the same interference source is identified by a further signal bearing device (25), wherein from several image acquisition devices (30, 35) of a control device the image acquisition device (30) is selected by the control device to generate the image acquisition or to provide a generated image acquisition.

12. The method according to one of the preceding claims, **characterized in that** the image acquisition generated at the optimum time or during the optimum time range and / or a vehicle registration number obtained from the image acquisition and suitable for identification of the vehicle is transmitted to a central computer together with information about the place of interference signal detection and / or image acquisition.

13. A system for the visual detection of a motor vehicle with a GNSS receiver whose intended function is impaired by a source of interference (12) arranged in the motor vehicle (10), having:
- a signal bearing device (20) which is arranged on a road and designed to detect an interference signal of the interference source (12) and to identify at least one bearing angle (ϕ) of the interference source (12);
- an image acquisition device (30) which is designed to generate image acquisitions of motor vehicles or motor vehicle areas; and
- a bearing angle processing device which is designed to determine, on the basis of the identified bearing angle (ϕ), an optimum time or an optimum time range at which the motor vehicle occupies in relation to the image acquisition device (30) a position which permits the identification of the motor vehicle (10) on the basis of an image acquisition generated at the optimum time or during the optimum time range.

14. The system according to claim 13, **characterized by** an image processing device which is designed to obtain from at least one generated image acquisition a vehicle registration number of the motor vehicle (10).

15. The system according to claim 13 or 14, **characterized in that** the
- the bearing angle processing device is designed to determine the optimum time range on the basis of the determined bearing angle (ϕ), and
- the image acquisition device is designed to generate a series of several image acquisitions during the optimum time range, wherein the system according to claim 13 further has:
- a signal detection device (70) which is designed to detect an interference signal of the interference source and to record a time course of a receive signal strength of the interference signal,
- a receive signal strength time course processing device which is designed to determine an optimum time or a limited optimum time range during the optimum time range based on the recorded time course of the receive signal strength, and
- an image processing device which is designed to select at least one image acquisition from the generated series of several image acquisitions on the basis of the optimum time or the limited optimum time range and to obtain from the selected image acquisition a vehicle registration number of the motor vehicle (10).

16. The method according to any one of claims 1 to 12 or the system according to any one of claims 13 to 15, **characterized in that** the signal bearing device (20) has a Doppler-finder, a Watson-Watt-finder and / or a correlative interferometer-finder.

## Revendications

1. Un procédé de détection visuelle d'un véhicule à moteur (10) qui transporte avec lui une source d'interférence (12) capable d'altérer la fonction prévue d'un récepteur de signal radio au moyen d'au moins un dispositif de relèvement de signal (20) disposé sur une route et d'au moins un dispositif d'acquisition d'image (30), comprenant les étapes suivantes :
- détecter un signal d'interférence de la source d'interférence (12) et identifier au moins un angle de relèvement (ϕ) de la source d'interférence (12) au moyen du dispositif de relèvement de signal (20) ;
- déterminer, sur la base de l'angle de relèvement identifié (ϕ), un moment optimal ou un intervalle de temps optimal auquel le véhicule à moteur (10) occupe par rapport au dispositif d'acquisition d'image (30) une position qui permet l'identification du véhicule à moteur (10) sur la base d'au moins une acquisition d'image générée au moment optimal ou pendant l'intervalle de temps optimal au moyen d'un dispositif de traitement de l'angle de relèvement ; et
- générer au moins une acquisition d'image du véhicule à moteur (10) ou d'une zone de véhicule à moteur du véhicule à moteur (10) au moment optimal ou pendant l'intervalle de temps optimal au moyen du dispositif d'acquisition d'image (30).

2. Le procédé selon la revendication 1, **caractérisé en ce qu'**au moment optimal ou pendant l'intervalle de temps optimal un signal de déclenchement d'image est transmis au dispositif d'acquisition d'image (30), et la génération de l'acquisition d'image du véhicule à moteur (10) ou de la zone du véhicule à moteur du véhicule à moteur (10) est déclenchée au moment optimal ou pendant l'intervalle de temps optimal à la suite de la réception du signal de déclenchement d'image dans le dispositif d'acquisition d'image.

3. Le procédé selon la revendication 1, **caractérisé en ce que** le moment optimal ou l'intervalle de temps optimal est communiqué au dispositif d'acquisition d'image (30), grâce à quoi le dispositif d'acquisition d'image (30) génère l'acquisition d'image du véhicule à moteur (10) ou de la zone du véhicule à moteur du véhicule à moteur (10) au moment optimal ou pendant l'intervalle de temps optimal.

4. Le procédé selon la revendication 1, **caractérisé en ce qu'**au moyen du dispositif d'acquisition (30) une série de plusieurs acquisitions d'image est générée, et un dispositif de traitement d'angle de relèvement choisit parmi la série de plusieurs acquisitions d'image au moins une acquisition d'image qui a été généré au moment optimal ou pendant l'intervalle de temps optimal.

5. Le procédé selon la revendication 4, **caractérisé en ce que** sur la base de l'angle de relèvement identifié au moyen du dispositif de traitement de l'angle de relèvement un intervalle de temps optimal est déterminé et le dispositif d'acquisition d'image (30) est déclenché en dépendance de l'intervalle de temps optimal pour générer la série de plusieurs acquisitions d'image pendant l'intervalle de temps optimal.

6. Le procédé selon la revendication 5, **caractérisé par** les étapes suivantes :
- détecter un signal d'interférence de la source d'interférence (12) et enregistrer au moins une courbe temporelle d'une intensité du signal récepteur du signal d'interférence au moyen d'un dispositif de détection de signal (70) ; et
- déterminer un temps optimal ou un intervalle de temps optimal limité dans l'intervalle de temps optimal sur la base de la courbe temporelle enregistrée de l'intensité du signal récepteur au moyen d'un dispositif de traitement de l'angle de relèvement.

7. Le procédé selon l'une des revendications précédentes, **caractérisé en ce qu'**au moins une acquisition d'image générée pour l'identification du véhicule à moteur (10) est soumise à une reconnaissance optique de caractère (OCR) d'un dispositif de traitement d'image.

8. Le procédé selon l'une des revendications précédentes, **caractérisé en ce que** le moment optimal ou l'intervalle de temps optimal est déterminé au moyen du dispositif de traitement de l'angle de relèvement comme le moment ou l'intervalle de temps auquel ou pendant lequel l'angle de relèvement (ϕ) tombe en dessous ou dépasse un angle de seuil prédéterminé ou est dans une plage d'angle prédéterminée.

9. Le procédé selon l'une des revendications 1 à 7, **caractérisé en ce que** deux ou plusieurs angles de relèvement (ϕ, ϕ') sont identifiés à différents moments, dans lequel au moyen du dispositif de traitement d'angle de relèvement le moment optimal ou l'intervalle de temps optimal est déterminé au moyen de l'extrapolation ou l'interpolation des angles de relèvement identifiés (ϕ, ϕ').

10. Le procédé selon la revendication 9, **caractérisée en ce qu'**un tracé de route d'une route sur laquelle le véhicule à moteur se déplace est inclus dans l'extrapolation ou l'interpolation.

11. Le procédé selon l'une des revendications précédentes, **caractérisé en ce qu'**un autre angle de relèvement (ψ) de la même source d'interférence est identifié par un autre dispositif de relèvement de signal (25), dans lequel parmi plusieurs dispositifs d'acquisition d'image (30, 35) d'un dispositif de contrôle le dispositif d'acquisition d'image (30) est choisi par le dispositif de contrôle pour générer l'acquisition d'image ou pour fournir une acquisition d'image généré.

12. Le procédé selon l'une des revendications précédentes, **caractérisé en ce que** l'acquisition d'image générée au moment optimal ou pendant l'intervalle de temps optimal et / ou un numéro d'immatriculation du véhicule obtenu à partir de l'acquisition d'image et adéquat pour l'identification du véhicule est transmis(e) à un ordinateur central avec des informations sur le lieu de détection de signal d'interférence et / ou l'acquisition d'image.

13. Un système de détection visuelle d'un véhicule à moteur ayant un récepteur GNSS dont la fonction prévue est altérée par une source d'interférence (12) disposée dans le véhicule à moteur (10), ayant :
- un dispositif de relèvement de signal (20) qui est disposé sur une route et conçu pour détecter un signal d'interférence de la source d'interférence (12) et pour identifier au moins un angle de relèvement (ϕ) de la source d'interférence (12) ;
- un dispositif d'acquisition d'image (30) qui est conçu pour générer des acquisitions d'image de véhicules à moteur ou de zones de véhicules à moteur ; et
- un dispositif de traitement de l'angle de relèvement qui est conçu pour déterminer, sur la base de l'angle de relèvement identifié (ϕ), un moment optimal ou un intervalle de temps optimal auquel le véhicule à moteur occupe par rapport au dispositif d'acquisition d'image (30) une position qui permet l'identification du véhicule à moteur (10) sur la base d'une acquisition d'image générée au moment optimal ou pendant l'intervalle de temps optimal.

14. Le système selon la revendication 13, **caractérisé par** un dispositif de traitement d'image qui est conçu pour obtenir à partir d'au moins une acquisition d'image générée un numéro d'immatriculation du véhicule à moteur (10).

15. Le système selon la revendication 13 ou 14, **caractérisé en ce que**
- le dispositif de traitement de l'angle de relèvement est conçu pour déterminer l'intervalle de temps optimal sur la base de l'angle de relèvement identifié (ϕ), et
- le dispositif d'acquisition d'image est conçu pour générer une série de plusieurs acquisitions d'image pendant l'intervalle de temps optimal, dans lequel le système selon la revendication 13 a en outre :
- un dispositif de détection de signal (70) qui est conçu pour détecter un signal d'interférence de la source d'interférence et enregistrer une courbe temporelle d'une intensité de signal de réception du signal d'interférence,
- un dispositif de traitement de la courbe temporelle d'intensité de signal récepteur qui est conçu pour déterminer un moment optimal ou un intervalle de temps optimal limité dans l'intervalle de temps optimal sur la base de la courbe temporelle enregistrée d'intensité du signal récepteur ; et
- un dispositif de traitement d'image qui est conçu pour choisir au moins une acquisition d'image parmi la série générée de plusieurs acquisitions d'image sur la base du moment optimal ou de l'intervalle de temps optimal limité et pour obtenir à partir de l'acquisition d'image choisie un numéro d'immatriculation du véhicule à moteur (10).

16. Le procédé selon l'une des revendications 1 à 12 ou le système selon l'une des revendications 13 à 15, **caractérisé en ce que** le dispositif de relèvement de signal (20) a un dispositif de relèvement de Doppler, un dispositif de relèvement de Watson-Watt et / ou un dispositif de relèvement d'interféromètre corrélatif.
